# NEUE EUROPÄISCHE PATENTSCHRIFT

(11) **EP 2 728 342 B2**
(45) Veröffentlichungstag und Bekanntmachung des Hinweises auf die Entscheidung über den Einspruch: **10.04.2019**
(45) Hinweis auf die Patenterteilung: 10.06.2015
(21) Anmeldenummer: 12191413.9
(22) Anmeldetag: 06.11.2012
(51) Int. Cl.: G01N 21/47, G01N 21/25, G01N 21/57, G01J 3/02, G01J 3/50

(54) **Handmessgerät zur Erfassung des visuellen Eindrucks eines Messobjekts**
Handheld measuring device for recording the appearance of an object to be measured
Appareil de mesure portatif destiné à saisir l'aspect visuel d'un objet de mesure

(43) Veröffentlichungstag der Anmeldung: 07.05.2014
(60) Teilanmeldung: 15152646.4
(73) Patentinhaber: X-Rite Switzerland GmbH, 8105 Regensdorf (CH)
(72) Erfinder: Ehbets, Peter, 8046 Zürich (CH); Frick, Beat, 8107 Buchs (CH); Wegmüller, Mark, 8165 Schöfflisdorf (CH); Hünkemeier, Jörg, 8006 Zürich (CH); Niederer, Guido, 8046 Zürich (CH)
(74) Vertreter: SSM Sandmair

(56) Entgegenhaltungen:
- EP-A1- 1 760 453
- EP-A1- 1 914 529
- DE-A1-102004 034 167

## Beschreibung

Die Erfindung betrifft ein Handmessgerät gemäss dem Oberbegriff des unabhängigen Anspruchs 1.

Der visuelle Eindruck eines realen Materials oder Objekts in einer Umgebung unter definierten Beleuchtungs- und Betrachtungsbedingungen wird in den einschlägigen Fachkreisen als "Appearance" bezeichnet. Im Folgenden wird wegen dieses allgemeinen Sprachgebrauchs nur dieser Fachbegriff verwendet.

Appearance ist bekanntlich das Ergebnis einer komplexen Interaktion verschiedener Faktoren:
- geometrische Faktoren, welche die Szene, das Objekt und die Beleuchtungs- und Betrachtungsbedingungen definieren
- optische Eigenschaften, welche die Interaktion des Lichts mit dem Material des betrachteten Objekts beschreiben
- physiologische Faktoren, welche die Empfindung (Reaktion) des menschlichen Sehsystems beeinflussen.

Die Messung von Appearance bezieht sich hauptsächlich auf den zweiten Punkt, die Bestimmung optischer Eigenschaften des Messobjekts und deren Einfluss auf die Verteilung des reflektierten und transmittierten Lichts. Appearance Mess-Daten werden benutzt, um Appearance Eigenschaften zu berechnen, welche mit dem visuellen Eindruck wie z.B. Farbe korrelieren. Dies ist relevant für industrielle Anwendungen wie z.B. Produktspezifikation und Qualitätskontrolle. Appearance Messdaten bilden auch die Basis für Appearance Simulation und Appearance Voraussage in Kombination mit physikalischen Modellen, die die Interaktion des Lichtes mit dem Material des Messobjekts nachbilden. Dies wird bei der Farbabstimmung (Color Matching) und bei der Renderung angewandt.

Der Bericht Nr. 175 mit dem Titel "A framework for the measurement of visual appearance" aus dem Jahr 2006 der "Comission Internationale de l'Eclairage" (CIE) gibt eine Übersicht dieses Themenkreises. Der Bericht gruppiert optische Eigenschaften und damit verbundene Appearance Eigenschaften in vier Hauptkategorien: Farbe, Glanz, Textur und Transluzenz.

Das Buch von R.S. Hunter, R.W. Harold, "The measurement of appearance", 2nd Ausgabe, 1987, John Wiley&Sons, beschreibt etablierte Messverfahren und Standards zur Erfassung spezifischer Appearance Eigenschaften. Gemäss z.B. CIE 2006 wird von totaler Appearance Erfassung (TAC) gesprochen, wenn ein kompletter Satz von Appearance relevanten Parametern gemessen wird.

Die optischen Eigenschaften und damit verbundenen Appearance Eigenschaften können in spektral abhängige, örtlich abhängige und winkelabhängige unterschieden werden.

Spektral abhängige Eigenschaften beziehen sich auf die Farbempfindung.

Textur ist die örtliche Variation der Oberfläche des betrachteten Objekts. Zwei Komponenten werden dabei unterschieden: Visuelle Textur charakterisiert die Uneinheitlichkeit oder Farb-Inhomogenität der Oberfläche; Oberflächentextur charakterisiert die dreidimensionale Topografie der Oberfläche in einem für das menschliche Auge auflösbaren Massstab.

Transluzenz schliesst auch eine örtliche Abhängigkeit ein. Sie beschreibt die seitliche Diffusion des Lichts durch Streuung und Mehrfachreflexion im Medium.

Farbe und Glanz sind hauptsächlich bestimmt durch die winkelabhängigen Reflexions- und Transmissionseigenschaften und stellen örtlich integrale Eigenschaften dar. Glanz wird dominant in einem Winkelbereich nahe der gerichteten bzw. spiegelnden Reflexion. Die winkelabhängige Lichtverteilung wird von der (für das menschliche Auge) nicht sichtbaren Oberflächenstruktur (z.B. Oberflächen-Rauheit) beeinflusst. Farbe ist die wichtige Eigenschaft weiter weg von der spiegelnden Richtung in den "diffusen" Reflexionsbereich.

Die winkelabhängigen und ortsabhängigen Eigenschaften werden durch den Betrachtungsabstand beeinflusst. Oberflächentextur ist sichtbar, wenn die laterale Grösse (Scale) und der Kontrast der Strukturen grösser sind als das Auflösungsvermögen des menschlichen Auges. Mit zunehmendem Betrachtungsabstand verschwindet die Textur allmählich und konvergiert in die entsprechenden winkelabhängigen Refexions- und Transmissionsgrössen.

Die visuelle Charakterisierung von Appearance für Materialien mit mehreren verschiedenen Appearance Eigenschaften ist schwierig und ist typischerweise nur durch visuellen Vergleich von Muster-Paaren mit sehr ähnlichen optischen Eigenschaften möglich. Appearance Eigenschaften sind untereinander verknüpft und abhängig. Diese gegenseitigen Abhängigkeiten müssen in geeigneten Appearance Beschreibungsmodellen berücksichtigt werden. Farbe ist für viele industrielle Anwendungen die wichtigste und primär interessierende Appearance Eigenschaft. Der farbliche Eindruck ist von örtlichen und winkelabhängigen Eigenschaften abhängig. Die visuelle Farbempfindung wird von benachbarten Farben und Beleuchtungsbedingungen beeinflusst. Sichtbare Textur an der Oberfläche des betrachteten Objekts reduziert die Empfindlichkeit für die Erkennung von Farbdifferenzen. Grosse Helligkeit und starke winkelabhängige Variation derselben beeinflussen die empfundene Helligkeit und beeinträchtigen die Erkennung von Farbdifferenzen. Empfundener Glanz ist ein multi-dimensionaler winkelabhängiger Parameter und beeinflusst durch die örtliche Verteilung des sichtbaren Glanzes über eine texturierte Oberfläche.

Die verbesserte Charakterisierung von Materialien mit komplexen Appearance Eigenschaften bedarf neuer Typen von kombinierten Appearance Messgeräten, welche eine systematische und reproduzierbare Beurteilung aller Appearance Eigenschaften ermöglichen.

Ein besonders wichtiges Anwendungsgebiet der Appearance Messung ist die Charakterisierung von speziellen Effekt-Pigmenten, wie sie z.B. in Automobil-Lacken eingesetzt werden.

Einer der Haupteigenschaften solcher Effekt-Pigmente ist deren gonio-chromatisches Verhalten im Fernfeld, zu dessen Erfassung mehrfache Messgeometrien mit verschiedenen Beleuchtungs- und Betrachtungswinkeln erforderlich sind. Verschiedene industrielle Standards schlagen jeweils geeignete Sätze von Messgeometrien vor. ASTM E2194-03 definiert einen Satz von mindestens 3 Messgeometrien für metallische Effekt-Pigmente. ASTM E2539 definiert zusätzliche Messgeometrien für die Charakterisierung von Interferenz-Pigmenten: insgesamt 8 Referenzmessgeometrien mit 2 Beleuchtungswinkeln 45° und 15° zur Erfassung von charakteristischen, interferenzbedingten Farbänderungen der Effekt-Pigmente.

Effekt-Pigmente erzeugen bekanntlich auch sichtbare Texturen an der Oberfläche des betrachteten Objekts. Die visuelle Textur ist unterschiedlich bei gerichteter Beleuchtung, wie z.B. direktem Sonnenlicht, und bei diffuser Beleuchtung, wie z.B. unter bedecktem Himmel. Die gerichtete Beleuchtung erzeugt ein Muster von sichtbaren Punktlichtquellen grosser Helligkeit, die von direkten Reflexionen an den spiegelnden Oberflächen der Pigment-Plättchen an der obersten Lackschicht herrühren. Diese Punktlichtquellen werden üblicherweise als Funkeln, Glitzern oder Mikro-Brillanz bezeichnet. Die diffuse Beleuchtung erzeugt eine lokale Helligkeitsvariation mit viel tieferem Kontrast, was üblicherweise als Körnigkeit, diffuse Körnigkeit, Bildkörnung oder Granularität bezeichnet wird. Die Publikationen von C.S. McCamy, "Observation and Measurement of the Appearance of Metallic Materials". Part I: Macro Appearance, Color Research and Application, Vol 21, 292-304, 1996 und C.S. McCamy, "Observation and Measurement of the Appearance of Metallic Materials". Part II: Micro Appearance, Color Research and Application, Vol. 23, 362-373, 1998 beschreiben auf Bildmessung basierende Methoden zur Charakterisierung von visuellen Textur-Eigenschaften von Materialien mit Effekt-Pigmenten. Die Publikation E. Kirchner et al., "Observation of Visual Texture of Metallic and Pearlescent Materials", Colour research and application, 32, 256-266, 2007 gibt eine aktuellere Übersicht über diese Thematik.

Für die Messung individueller spezifischer Appearance Eigenschaften wie Farbe und Glanz existiert eine Reihe von Handmessgeräten, siehe die Geräte-Portfolios verschiedener einschlägiger Firmen wie z.B. X-Rite, Datacolor, BYK Gardner, Konika, Minolta.

Beispiele sind Farbmessgeräte mit zirkularer 45°/0° Messgeometrie oder d/8 Messgeometrie mit diffuser Beleuchtung aus einer Integrator-Kugel oder Handmessgeräte für gerichteten Glanz bei 1-3 Beleuchtungswinkeln (Gerät Tri-gloss von BYK Gardner).

Die Firma Rhopoint stellt ein Gerät Rhopoint IQ her, welches neben einer Drei-Winkel-Messgeometrie für gerichteten Glanz in einem Kanal ein zusätzliches Detektorfeld enthält, welches zur Charakterisierung weiterer Glanz-Eigenschaften dient, die mit der goniofotometrischen Intensitätsverteilung zusammenhängen. Dieses Messkonzept ist nicht geeignet für die Erfassung von Farbe und Textur.

Es sind bereits Messgeräte bekannt, welche für die Messung sowohl von Farbe als auch von gerichtetem Glanz ausgebildet sind. Beispiele sind das Gerät Spectro-Guide von BYK Gardner oder das Gerät 45G von Datacolor. Diese Geräte verwenden jeweils zwei verschiedene Messsysteme einerseits für Farbe (entweder 45°/0° oder diffuse Messgeometrie) und anderseits für gerichteten Glanz (60° Messgeometrie ohne Farbinformation). Diese Geräte können keine konsistenten Appearance Messdaten-Sets erzeugen, d.h. mit derselben Messgeometrie erfasste Messdaten-Sets für verschiedene Appearance Eigenschaften. Die verschiedenen Messwerte sind nicht aufeinander bezogen. Ausserdem können diese Geräte keine Texturen erfassen.

Es sind auch schon Mehrwinkel-Farbmessgeräte für die Charakterisierung von Effekt-Pigmenten bekannt. Diese Geräte ermöglichen die Messung des spektralen Reflexionsfaktors mit den mehrfachen Messgeometrien, wie sie z.B. in den ASTM Standards definiert sind. Ein repräsentatives Beispiel für solche Messgeräte ist das Gerät MA98 von X-Rite mit zwei gerichteten Weiss-Beleuchtungskanälen (15° und 45°) und zehn teils in einer Ebene, teils ausserhalb dieser Ebene angeordneten gerichteten Messkanälen (Aufpickkanälen).

Das Gerät BYKmac von BYK Gardner kombiniert spektrale Mehrwinkel-Farbmessung mit monochromatischer Textur-Messung. Die beiden Funktionalitäten sind zwar im selben Messgerät vereint, aber mittels komplett separater Messsysteme für Farbe und Textur realisiert. Der Textur-Messteil enthält keine Farbinformation. Die Farbinformation und die Texturinformation werden bei verschiedenen Betrachtungswinkeln gewonnen und bilden kein konsistentes Daten-Set des betrachteten Objekts für eine spezifische Beobachtungsgeometrie. Die spektrale Messwerterfassung ist durch eine einzelne spektrale Lichtquelle und mehrere integral messende Detektor-Systeme implementiert. Die Texturerfassung verwendet eine Weiss-Beleuchtung und eine unter 0° angeordnete monochromatische Kamera. Eine simultane Datenerfassung ist mit diesem Gerät nicht möglich. Die Messung erfordert einen sequentiellen Ablauf von Farb- und Texturerfassung. Das Konzept mit separaten Messsystemen und sequentiellem Messablauf limitiert zeitlich und beschränkt die Anzahl realisierbarer Messgeometrien. Ausserdem ist das Gerät mit der unter 0° angeordneten Kamera nicht für Glanzmessungen geeignet.

Für Labor-Anwendungen sind schon generellere Messinstrumente bekanntgeworden. Diese enthalten Femfeld-Messsysteme, welche die bi-direktionale Reflektanz-Verteilungsfunktion (BRDF, siehe z.B. F.E. Nicodemus et al, "Geometrical Considerations and Nomenclature for Reflectance", National Bureau of Standards NIST report, 1977) im Halbraum über der Oberfläche des Messobjekts erfassen. Diese bekannten Messinstrumente können zwar spektrale Relexionseigenschaften für Farbe und für Glanz mit verschiedenen Messgeometrien erfassen, sind aber systembedingt relativ gross und daher nicht für die Realisierung eines kompakten Handmessgeräts, insbesondere mit zusätzlicher Textur-Erfassungsfunktionalität geeignet. Beispiele für solche Messinstrumente sind das gonio-spektrometrische Farbmessgerät GSMS-3B von Murakami und die Kamera-basierten BRDF-Messgeräte Parousiameter von RadiantZemax und Ezcontrast von Eldim oder das in der Dissertation von G. Ward, "Measuring and modeling anisotropic reflectance", Proceeding Siggraph 1992, beschriebene System.

Eine Möglichkeit der Textur-Erfassung mit Kamera-basiertem Detektor und verschiedenen Beleuchtungsgeometrien ist der Publikation K. Dana et al., « Reflectance and texture of real world surfaces », ACM Transactions on Graphics, Vol. 18, No. 1, January 1999, Pages 1-34 beschrieben. Entsprechende Erfassungssysteme sind dabei mittels beweglicher Roboter-Arme zur Variation der Messgeometrie realisiert. Solche Anordnungen sind für Handmessgeräte natürlich nicht geeignet.

Basierend auf diesen Ausführungen und unter Vermeidung der Nachteile des bekannten Stands der Technik soll durch die vorliegende Erfindung ein Handmessgerät für industrielle Anwendungen geschaffen werden, welches verschiedene Appearance-Eigenschaften von (reflektierenden) Messobjekten gleichzeitig erfassen kann. Insbesondere soll das Handmessgerät die messtechnischen Voraussetzungen bereitstellen, um moderne Effektpigmente in verschiedenen Medien (Substraten) wie z.B. Automobil-Lacken, Drucktinten, Kunststoffen und Kosmetika charakterisieren zu können. Das Handmessgerät soll ferner auch für andere Medien mit anderem Appearance Verhalten für Farbe, Glanz und Textur geeignet sein.

Ein spezifischeres Ziel der vorliegenden Erfindung ist es, die messtechnischen Voraussetzungen zu schaffen, um konsistente kalibrierte Appearance Daten-Sätze zu erzeugen, die die Reproduktion des Appearance Verhaltens ermöglichen. Dazu sind kalibrierte Messdaten-Sätze für die spektralen, örtlichen und richtungsabhängigen Domänen in jeder spezifizierten Beobachtungsrichtung erforderlich.

Ein weiteres spezifischeres Ziel der vorliegenden Erfindung ist die Bereitstellung einer tragbaren, handhaltbaren Instrumenten-Plattform für industrielle Anwendungen, welche multiple Appearance Eigenschaften gleichzeitig messen kann. Die dabei eingesetzte Messtechnologie soll spektrale Mehrwinkel-Farbmessung, visuelle Textur-Messung und Glanz-Messung mit demselben optischen System kombinieren können und auch für die Charakterisierung von Transluzenz erweiterbar sein.

Durch die Erfindung soll ferner auch ein Messgerät bereitgestellt werden, das kompakt ist (Handhaltbarkeit), sich durch kurze Messdauer und hohe Messgenauigkeit und Reproduzierbarkeit der Messergebnisse auszeichnet und unter ausreichend niedrigen Kosten herstellbar ist.

Als Folge dieser Anforderungen soll durch die Erfindung weiter ein Messgerät bereitgestellt werden, das die erforderlichen multi-funktionalen Messfähigkeiten mit einem Minimum an Komponenten realisiert, wobei optische Funktionsblöcke mehrfach eingesetzt werden können. Insbesondere sollen Multiplex-Messungen und simultane Messdatenerfassung möglich sein. Die Mehrfach-Verwendung optischer Komponenten optimiert die Baugrösse und reduziert Herstellungskosten. Simultane Messdatenerfassung optimiert die Messzeiten und verbessert sowohl die erreichbare Präzision bei handgehaltenem Einsatz des Messgeräts, als auch die Übereinstimmung der verschiedenen Appearance-Attribute.

EP 1 914 529 A1, EP 1 760 453 A1 und DE 10 2004 034 167 A1 offenbaren optische Messgeräte unter anderem in der Ausbildung als Handmessgerät, die zur Spektralmessung von von einer Probe reflektierten Licht eingerichtet sind. EP 1 914 529 A1 erläutert, dass dazu auch eine gleichzeitige Messung des reflektierten Lichts mittels eines Spektrometers und eines digitalen Bildsensors unter denselben Beobachtungsbedingungen möglich ist. EP 1 760 453 A1 erläutert die Verwendung einer Steuerelektronik zum Steuern der Mess- und Verarbeitungsvorgänge. DE 10 2004 034 167 A1 erläutert die Bestrahlung der Probe unter unterschiedlichen Raumwinkeln.

Dieser der Erfindung zugrundeliegende Aufgabenkomplex wird durch das durch die Merkmale des unabhängigen Anspruchs 1 gekennzeichnete erfindungsgemässe Handmessgerät gelöst. Vorteilhafte Ausgestaltungen und Weiterbildungen des erfindungsgemässen Handmessgeräts sind Gegenstand der abhängigen Ansprüche

Das Wesen der Erfindung besteht in Folgendem: Ein Handmessgerät zur Erfassung des visuellen Eindrucks eines Messobjekts umfasst eine Messanordnung, eine elektronische Steueranordnung und ein die Messanordnung und die Steueranordnung aufnehmendes Gehäuse mit einer Messöffnung, durch welche hindurch die Beleuchtung eines Messfelds auf einer Oberfläche eines Messobjekts und das Aufpicken des vom Messfeld zurückgestrahlten Messlichts erfolgt. Die Messanordnung umfasst eine Anzahl von Beleuchtungseinrichtungen zur Beaufschlagung des Messfelds mit Beleuchtungslicht in mindestens drei auf eine Gerätenormale bezogenen Beleuchtungsrichtungen und eine Anzahl von Aufpickeinrichtungen zur Erfassung des Messlichts in mindestens einer auf die Gerätenormale bezogenen Beobachtungsrichtung. Mindestens eine spektrale Aufpickeinrichtung ist zur örtlich integralen spektralen Ausmessung des vom Messfeld zurückgestrahlten Messlichts und mindestens eine bildgebende Aufpickeinrichtung ist zur örtlich aufgelösten Ausmessung des Messlichts ausgebildet. Die bildgebende Aufpickeinrichtung ist auch zur farblichen Ausmessung des Messlichts ausgebildet. Die spektrale Aufpickeinrichtung und die bildgebende Aufpickeinrichtung sind so angeordnet, dass sie das vom Messfeld zurückgestrahlte Messlicht unter denselben Beobachtungsbedingungen und insbesondere aus derselben Beobachtungsrichtung empfangen, wobei das Sichtfeld der örtlich auflösenden (bildgebenden) Aufpickeinrichtung gleich oder grösser sein kann als dasjenige der spektralen Aufpickeinrichtung.

Erfindungsgemäss umfasst die spektrale Aufpickeinrichtung als Lichtdetektor ein Spektrometer und die bildgebende Aufpickeinrichtung als Lichtdetektor eine digitale Farbkamera, und weist die Messanordnung einen Strahlenteiler auf, der einen abschnittsweise gemeinsamen Aufpickstrahlengang aufteilt und einerseits auf das Spektrometer und anderseits auf die Farbkamera lenkt.

Die mindestens drei Beleuchtungsrichtungen und die mindestens eine Beobachtungsrichtung liegen erfindungsgemäss in einer gemeinsamen, durch die Gerätenormale verlaufenden System-Ebene.

Um die Polarisationsabhängigkeit zu minimieren ist der Strahlenteiler erfindungsgemäss um im Wesentlichen 45° aus der System-Ebene herausgedreht angeordnet, so dass das Messlicht für die Farbkamera aus der System-Ebene herausgeleitet wird. Diese Massnahme gleicht die s und p Polarisationskomponenten aus, welche orthogonal zur System-Ebene stehen.

Vorteilhafterweise ist die Beobachtungsrichtung der spektralen Aufpickeinrichtung und der bildgebenden Aufpickeinrichtung in der System-Ebene bezüglich der Gerätenormalen um 15° geneigt.

Weiter ist es vorteilhaft, wenn die Messanordnung eine weitere spektrale Aufpickeinrichtung aufweist, die das vom Messfeld zurückgestrahlte Messlicht aus einer anderen Beobachtungsrichtung als der Beobachtungsrichtung der bildgebenden Aufpickeinrichtung empfängt.

Vorzugsweise ist die Beobachtungsrichtung der weiteren spektralen Aufpickeinrichtung in der System-Ebene bezüglich der Gerätenormalen um 45° geneigt. Zweckmässigerweise weist die Messanordnung Beleuchtungseinrichtungen mit unterschiedlichen Beleuchtungsrichtungen auf, die bezüglich der Gerätenormalen in die entgegengesetzte Richtung wie die Beobachtungsrichtungen der Aufpickeinrichtungen geneigt sind.

Vorteilhafterweise weist die Messanordnung auch Beleuchtungseinrichtungen mit unterschiedlichen Beleuchtungsrichtungen auf, die bezüglich der Gerätenormalen in dieselbe Richtung wie die Beobachtungsrichtungen der Aufpickeinrichtungen geneigt sind.

Gemäss einer vorteilhaften Ausführungsform weist die Messanordnung eine zusätzliche Glanzbeleuchtungseinrichtung auf, die vorzugsweise zur System-Ebene geneigt angeordnet ist und das Messfeld unter einem Winkel von im Wesentlichen 20° zur System-Ebene mit einem divergenten Strahlenbündel beleuchtet.

Gemäss einer weiteren vorteilhaften Ausführungsform weist die Messanordnung für Glanzmessungen ein optisches Element, insbesondere eine Linse mit negativer Brechkraft, auf, das in das Bildfeld hinein und aus diesem heraus beweglich ist und eine virtuelle konvexe Bildfeldwölbung erzeugt.

Vorteilhafterweise weist die Messanordnung eine ausserhalb der System-Ebene angeordnete Beleuchtungseinrichtung auf, welche das Messfeld weitschweifig ausleuchtet.

Gemäss einer weiteren vorteilhaften Ausführungsform ist eine Beleuchtungseinrichtung mit einem in ihren Beleuchtungsstrahlengang einbringbaren optischen Element ausgestattet, welches eine Verkleinerung des von der Beleuchtungseinrichtung ausgeleuchteten Bereichs bewirkt. Dabei liegt die mit dem optischen Element ausgestattete Beleuchtungseinrichtung bezüglich der Gerätenormalen vorteilhafterweise auf derselben Seite wie die Aufpickeinrichtungen.

Weiter ist es vorteilhaft, wenn die Messanordnung eine integrierte Weissreferenz aufweist, die vorübergehend in die Strahlengänge der Beleuchtungseinrichtungen und der Aufpickeinrichtungen einbringbar ist. Dabei ist es besonders zweckmässig, wenn die Messanordnung eine insbesondere ausserhalb der System-Ebene angeordnete Referenzbeleuchtungseinrichtung zur Beleuchtung der Weissreferenz mit Licht mit schmalbandigen Wellenlängenbereichen aufweist. Vorzugsweise ist die Weissreferenz dazu ausgebildet, in randnahen Bereichen auf sie auftreffendes Licht in einen zentralen Bereich der Weissreferenz umzulenken.

Gemäss einer besonders vorteilhaften Ausführungsform sind zumindest einigen, insbesondere den in der System-Ebene angeordneten Beleuchtungseinrichtungen Referenzkanäle zugeordnet, welche einen Teil des Beleuchtungslichts aus den Beleuchtungseinrichtungen auskoppeln und über Lichtleiter und einen Lichtmischer einem Spektrometer zuführen.

Erfindungsgemäß ist die Steueranordnung dazu ausgebildet, von der bildgebenden Aufpickeinrichtung erzeugte Farbbilddaten mittels von derjenigen spektralen Aufpickeinrichtung, welche dieselbe Beobachtungsrichtung wie die bildgebende Aufpickeinrichtung aufweist, erzeugter Spektralmesswerte farblich zu korrigieren.

Vorzugsweise ist die Steueranordnung dazu ausgebildet, die von der bildgebenden Aufpickeinrichtung erzeugten Farbbilddaten in standardisierte Farbbilddaten mit definierter Auflösung, Skala relativ zum absoluten Weiss und Farbraum CIE XYZ oder sRGB umzurechnen.

Zweckmässigerweise sind zumindest einige, insbesondere die in der System-Ebene angeordneten Beleuchtungseinrichtungen im Wesentlichen gleich aufgebaut und weisen jeweils mindestens eine primäre Lichtquelle und eine durch eine Apertur bzw. Feldblende gebildete sekundäre Lichtquelle auf, wobei die mindestens eine primäre Lichtquelle die sekundäre Lichtquelle über einen Kollimator und einen Homogenisator ausleuchtet.

Besonders zweckmässig ist es, wenn zumindest einige der Beleuchtungseinrichtungen eine gemeinsame zentrale Lichtquelle aufweisen, deren Ausgangslicht über einen Multiplexer auf die Beleuchtungskanäle der Beleuchtungseinrichtungen sowie ggf. auch eine Referenzaufpickeinrichtung verteilt wird.

Dabei ist es von Vorteil, wenn die Beleuchtungseinrichtungen oder die zentrale Lichtquelle nichtabbildende Kollimatoren enthalten, die einen weitgehend verlustfreien Zugriff auf die gesamte Etendue einer oder mehrerer Primärlichtquelle(n) erlauben.

Weiter ist es vorteilhaft, wenn bei den Beleuchtungseinrichtungen oder der zentralen Lichtquelle eine oder mehrere zusätzliche Lichtquellen über den nicht genutzten Teil der Etendue einer oder mehrerer Primärlichtquelle(n) hinzugefügt wird(werden).

Besonders zweckmässig ist es, wenn bei den Beleuchtungseinrichtungen oder der zentralen Lichtquelle Referenzlicht über den nicht genutzten Teil der Etendue der Primärlichtquelle(n) ausgekoppelt wird.

Vorzugsweise weist die Messanordnung auch eine Beleuchtungseinrichtung auf, deren Beleuchtungsrichtung in Richtung der Gerätenormalen verläuft.

Weiters ist es vorteilhaft, wenn die Messanordnung eine Beleuchtungseinrichtung aufweist, deren Beleuchtungsrichtung bezüglich der Gerätenormalen in die entgegengesetzte Richtung wie die Beobachtungsrichtungen der Aufpickeinrichtungen um einen Winkel von -20° geneigt ist.

Besonders vorteilhaft ist es, wenn die Messanordnung eine Beleuchtungseinrichtung aufweist, deren Beleuchtungsrichtung bezüglich der Gerätenormalen in die entgegengesetzte Richtung wie die Beobachtungsrichtungen der Aufpickeinrichtungen um einen Winkel von -45° geneigt ist.

Vorteilhafterweise weist die Messanordnung eine Beleuchtungseinrichtung auf, deren Beleuchtungsrichtung bezüglich der Gerätenormalen in die entgegengesetzte Richtung wie die Beobachtungsrichtungen der Aufpickeinrichtungen um einen Winkel von -30° geneigt ist.

Ferner ist es vorteilhaft, wenn die Messanordnung eine Beleuchtungseinrichtung aufweist, deren Beleuchtungsrichtung bezüglich der Gerätenormalen in die entgegengesetzte Richtung wie die Beobachtungsrichtungen der Aufpickeinrichtungen um einen Winkel von -60° geneigt ist.

Ferner ist es auch vorteilhaft, wenn die Messanordnung eine Beleuchtungseinrichtung aufweist, deren Beleuchtungsrichtung bezüglich der Gerätenormalen in dieselbe Richtung wie die Beobachtungsrichtungen der Aufpickeinrichtungen um einen Winkel von 30° geneigt ist.

Weiters ist es auch vorteilhaft, wenn die Messanordnung eine Beleuchtungseinrichtung aufweist, deren Beleuchtungsrichtung bezüglich der Gerätenormalen in dieselbe Richtung wie die Beobachtungsrichtungen der Aufpickeinrichtungen um einen Winkel von 65° geneigt ist.

Ein Appearance Messsystem für Texturen erfordert eine Kamera und digitale Bildverarbeitungstechnologie. Um eine Übereinstimmung mit visueller Appearance zu erreichen, ist das optische System der Kamera mit ähnlichen optischen Eigenschaften wie das menschliche Sehsystem ausgebildet. Das schliesst einen ähnlich kleinen Betrachtungs-Kegel-Winkel, eine örtliche Auflösung unter der Auflösungsgrenze des menschlichen Auges bei der Nahpunkt-Betrachtungsdistanz von 250 mm und die Ausgabe von absolut kalibrierten Farbdaten ein. Diese Anforderungen sind geeignet, um Farb-, Glanz- und visuelle Textur-Daten zu erzeugen.

Das optische Konzept des erfindungsgemässen Messgeräts kombiniert verschiedene Detektorsysteme (d.h. Aufpickeinrichtungen) für verschiedene Appearance Eigenschaften beim selben spezifizierten Betrachtungswinkel, so dass sich diese denselben Betrachtungswinkel teilen. Dies erlaubt parallele Messdaten-Erfassung und reduziert den benötigten Platz. Ferner können erst dadurch konsistente Messdaten-Sets für die Beschreibung aller Appearance Eigenschaften beim spezifizierten Betrachtungswinkel erzeugt werden.

Das optische Konzept des erfindungsgemässen Messgeräts ermöglicht, dass ein und dasselbe Beleuchtungssystem (d.h. die Beleuchtungseinrichtungen) für die Messung aller Appearance Eigenschaften, z.B. Farbe, Glanz und visuelle Textur, verwendet werden kann.

Das Beleuchtungssystem (d.h. die Beleuchtungseinrichtungen) erzeugt Licht über den gesamten spektralen Messbereich. Das entspricht dem vollen sichtbaren Wellenlängenbereich für Farbmessungen, d.h. ca. 400 nm - ca. 700 nm ("Weisslichtbeleuchtung"). Erweiterungen des Spektralbereichs zu UV- und IR sind möglich. UV-Beleuchtung ist erforderlich für die Charakterisierung von optischen Aufhellern im Messobjekt. Beleuchtung im nahen IR-Bereich kann zur Diskriminierung der spektralen Eigenschaften mancher Pigmente eingesetzt werden. Geeignete Lichtquellen mit flexiblen spektralen Eigenschaften sind vorteilhafterweise durch LED-Technologie realisiert, können aber auch durch andere Weisslichtquellen wie z.B. Halogenlampen ersetzt werden.

Da alle Detektoren (Aufpickeinrichtungen) in einem von 0° abweichenden Winkel zur Gerätenormalen angeordnet sind, können sie gleichzeitig auch zur Erfassung von Glanz und für Mehrwinkel-Farbmessung verwendet werden.

Technische Anwendungen wie z.B. Farbabstimmung (Color Matching) erfordern mehr als Tri-Stimulus-Farbinformation, wie sie von konventionellen RGB-Kameras oder analogen Bildsensoren erzeugt wird. Farbabstimmung (Color Matching) erfordert im allgemeinen die volle spektrale Information, um die richtige Pigment-Kombination auszuwählen und Metamerie-Effekte und verschiedene Beleuchtungsquellen zu berücksichtigen. Die ideale Detektor-Technologie für solche Anwendungen bestünde in einer Multispektral-Kamera, die absolut kalibrierte spektrale Reflexionsfaktor-Werte für jeden Bildpunkt liefern kann. Solche Kameras sind zwar verfügbar, aber verhältnismässig aufwendig und teuer, so dass sie für ein für den breiten Einsatz konzipiertes Handmessgerät nicht in Frage kommen.

Gemäss eines wichtigen Aspekts der vorliegenden Erfindung werden multi-spektrale Bilddaten-Sets durch eine Kombination verschiedener Rohdaten-Quellen erzeugt. Konkreter werden RGB-Bilddaten einer Farbkamera mit den Messwerten eines zusätzlichen Spektral-Detektors (Spektrometers) kombiniert, welcher integrale spektrale Remissionsmesswerte über dasselbe Messfeld erzeugt. Der Betrachtungsstrahlengang beider Detektorsysteme (Farbkamera und Spektrometer) wird dabei mittels eines Strahlenteilers gleichzeitig auf die beiden Detektorsysteme gelenkt. Die RGB Bilddaten der Kamera werden unter Anwendung bekannter Color Management Techniken (siehe z.B. J. Hardeberg, "Acquisition and reproduction of color images: colorimetric and multi-spectral approaches", Ph.D Thesis, 1999) zu absoluten Farbdaten kalibriert. Die spektralen Remissionsdaten stehen als präzise integrale Farbinformation für technische Anwendungen zur Verfügung. Die gemessene spektrale Information wird benutzt, um die Farbkalibration der Bilddaten zu korrigieren und die Farbgenauigkeit zu erhöhen. Dadurch können Metamerie-Effekte für verschiedene Beleuchtungsspektren reduziert werden. Ferner können dadurch auch konsistente Appearance Daten-Sets mit konsistenter Farbinformation für variierende Betrachtungsdistanzen vom Nahpunkt bis zum Fernfeld ohne sichtbare Textur-Effekte erzeugt werden. In dieser Kombination werden relative Farbmesswerte der Bilddaten weiterverarbeitet. Relativ bedeutet, dass sie mit dem genauen Farbwert aus der spektralen Messung korrigiert werden. Die Korrektur umfasst im Minimum eine Mittelwertskorrektur, so dass der Mittelwert der Bilddaten gleich dem berechneten Farbwert aus der spektralen Messung ist Die relative Messgenauigkeit einer RGB Kamera ist viel besser als die absolute Genauigkeit. Diese Arbeitsweise ist für die meisten Textur-Anwendungen geeignet.

Im Folgenden wird die Erfindung anhand der Zeichnung näher erläutert. Es zeigen:
- Fig. 1: eine Schrägansicht eines Ausführungsbeispiels des erfindungsgemässen Handmessgeräts,
- Fig. 2: eine Schrägansicht einer Messanordnung des Handmessgeräts,
- Fig. 3: eine teilweise aufgeschnittene Ansicht der Messanordnung der Fig. 2,
- Fig. 4: einen Vertikalschnitt durch die Messanordnung nach der Linie IV-IV der Fig. 2,
- Fig. 5-6: zwei prinzipielle Ausführungsformen von Beleuchtungseinrichtungen der Messanordnung,
- Fig. 7-8: zwei Detaildarstellungen einer weitschweifigen Beleuchtungseinrichtung und einer beweglichen Weissreferenz der Messanordnung in zwei verschiedenen Stellungen der letzteren,
- Fig. 9: eine vereinfachte Seitenansicht der Messanordnung mit Strahlengängen zur Verdeutlichung der Verhältnisse bei eingeschobener Weissreferenz,
- Fig. 10: eine Detaildarstellung der Weissreferent,
- Fig. 11-13: prinzipielle Darstellungen von verschiedenen Realisierungsformen der Beleuchtungseinrichtungen der Messanordnung,
- Fig. 14: einen Vertikalschnitt analog Fig. 4 durch die Messanordnung mit Strahlengängen zur Verdeutlichung der Verhältnisse bei einer Glanzmessung,
- Fig. 15: eine Darstellung analog Fig. 14 mit einem zusätzlichen Element für Glanzmessungen,
- Fig. 16: eine vereinfachte Seitenansicht analog Fig. 2 der Messanordnung mit einer zusätzlichen Beleuchtungseinrichtung für Glanzmessungen,
- Fig. 17: einen vereinfachten Schnitt analog Fig. 4 durch die Messanordnung mit einem zusätzlichen optischen Element für die Erfassung von Transluzenz,
- Fig. 18: eine weiter vereinfachte Seitenansicht der Messanordnung mit einer zusätzlichen Referenz-Beleuchtungseinrichtung,
- Fig. 19: einen Vertikalschnitt durch die Messanordnung entlang der Linie XIX-XIX der Fig. 18,
- Fig. 20: einen zur Linie IV-IV der Fig. 2 um 90° verdrehten Vertikalschnitt durch die Messanordnung einer um Referenzkanäle erweiterten Ausführungsform des Handmessgeräts,
- Fig. 21: eine vereinfachte Schrägansicht der Messanordnung der Fig. 20,
- Fig. 22: eine Prinzipskizze einer weiteren Realisierungsform der Beleuchtungseinrichtungen,
- Fig. 23-24: zwei Prinzipskizzen einer alternativen Realisierungsform einer Weissreferenz,
- Fig. 25: ein Blockschema der optischen und elektronischen Komponenten des Handmessgeräts und
- Fig. 26: ein Blockschema der Messwertaufbereitung des Handmessgeräts.

Für die nachfolgende Figurenbeschreibung gilt folgende Festlegung: Sind in einer Figur einzelne Bezugszeichen nicht eingetragen, so wird diesbezüglich auf die übrigen Figuren und die dazu gehörigen Beschreibungsteile verwiesen. Unter den verkürzten Begriffen "Messgerät" und "Gerät" wird immer ein Handmessgerät verstanden, das für die Erfassung der zur eingangs definierten "Appearance" beitragenden Eigenschaften eines Messobjekts ausgebildet ist. Unter "Messanordnung" wird die Gesamtheit derjenigen Komponenten des Handmessgeräts verstanden, welche zur Beleuchtung eines Messflecks auf der Oberfläche eines Messobjekts und zur Erfassung des von diesem Messfleck zurückgestrahlten Lichts und zur Umwandlung desselben in korrespondierende elektrische Signale dienen. Unter "Gerätenormale" wird eine gedachte, gerätefeste gerade Linie verstanden, die im Wesentlichen durch den Mittelpunkt der Messöffnung des Messgeräts verläuft und bei auf einem ebenen Messobjekt positioniertem Messgerät senkrecht auf dem Messobjekt steht. Üblicherweise liegt die Ebene der Messöffnung parallel zur Oberfläche des Messobjekts, so dass die Gerätenormale auch senkrecht auf der Messöffnung steht. Unter "vertikal" wird die Richtung der Gerätenormalen verstanden. Entsprechend sind Vertikalschnitte als ebene Schnitte durch die Gerätenormale oder parallel zu dieser zu verstehen. Alle Richtungs- bzw. Winkelangaben beziehen sich auf die bezüglich des Messgeräts ortsfeste Gerätenormale.

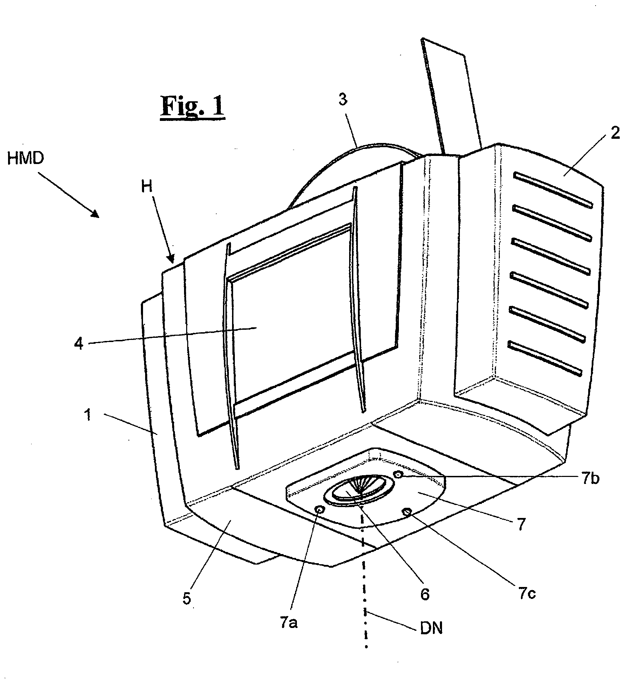

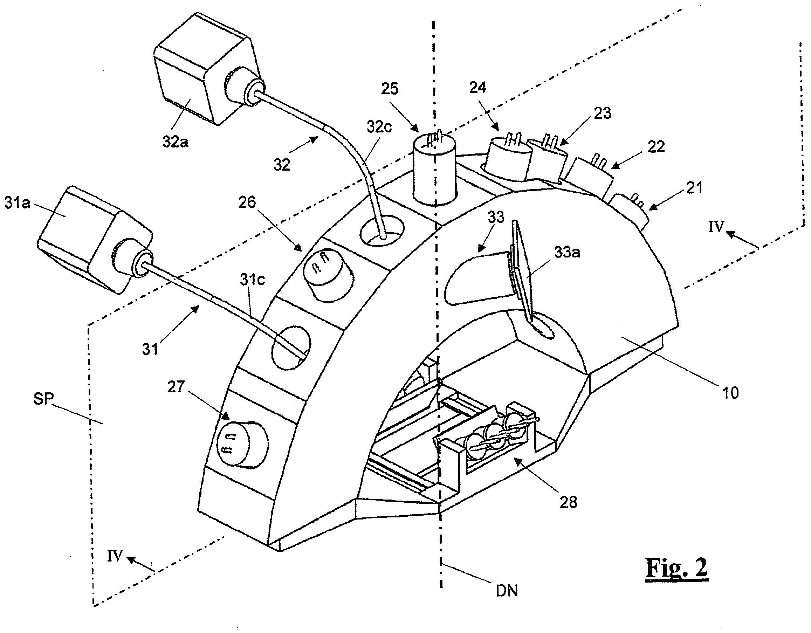

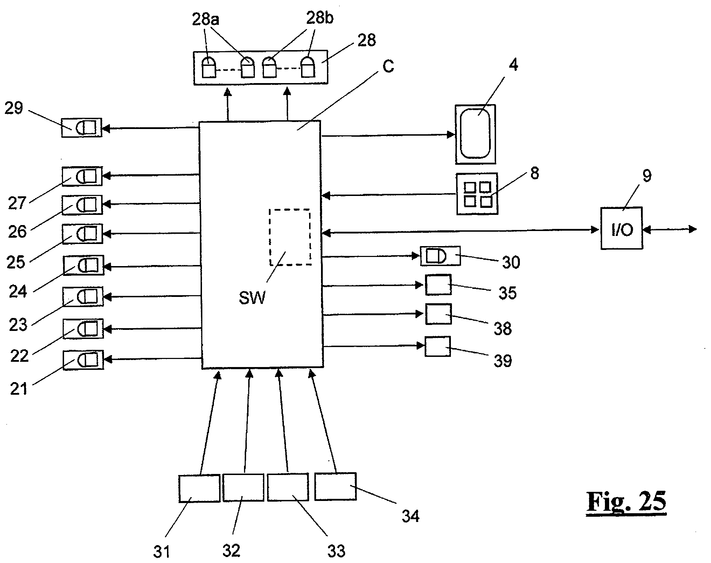

Das in Fig. 1 dargestellte Handmessgerät ist als Ganzes mit HMD bezeichnet. Es umfasst ein Gehäuse H, das eine Messanordnung MA (Fig. 2) und eine diese steuernde elektronische Steueranordnung C (Fig. 25) aufnimmt. Am Gehäuse H sind seitlich zwei Griffteile 1 und 2 ausgebildet. An der Oberseite des Gehäuses H ist eine Tragschlaufe 3 angeordnet. An der Vorderseite des Gehäuses H ist eine Anzeigeanordnung 4 vorgesehen. Ferner sind an der Oberseite des Gehäuses H in Fig. 25 schematisch dargestellte Bedienungsorgane 8 angeordnet.

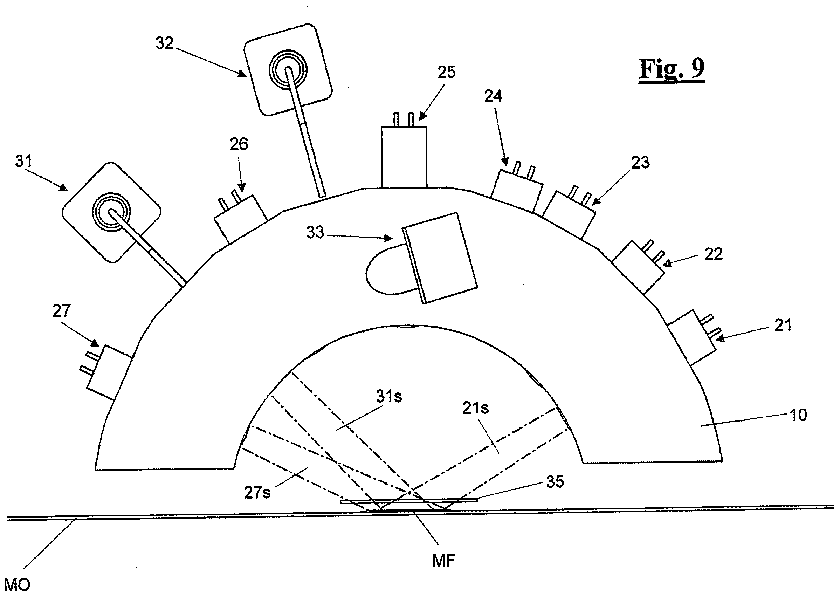

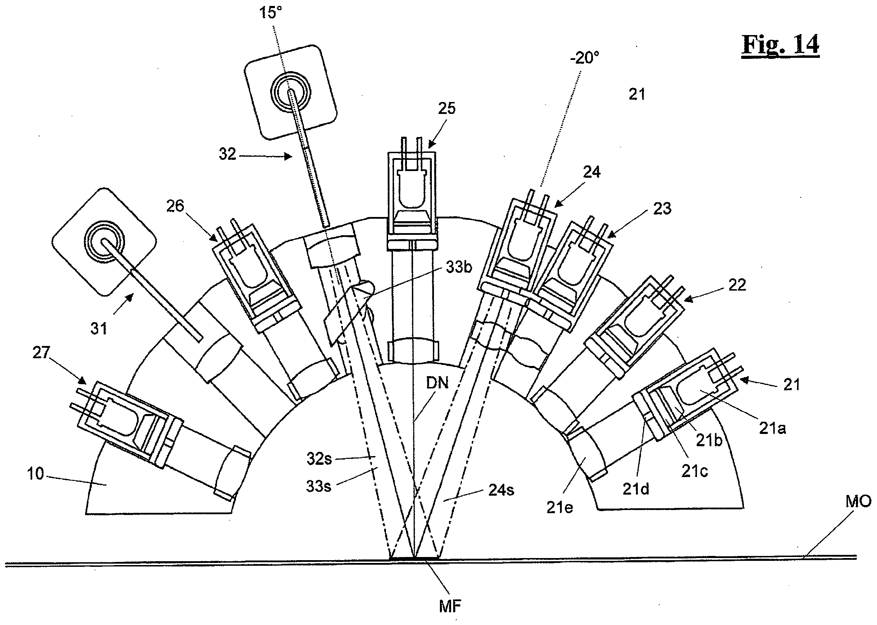

An der Unterseite weist das Gehäuse H einen Gehäuseboden 5 auf, der durch eine mit einer Messöffnung 6 versehene Basisplatte 7 verstärkt ist. Der Gehäuseboden 5 weist im Bereich der Messöffnung 6 eine nicht bezeichnete Durchbrechung auf, so dass Licht aus dem Gehäuseinneren durch die Durchbrechung und die Messöffnung 6 austreten und umgekehrt Licht von aussen durch die Messöffnung 6 und die Durchbrechung in das Gehäuseinnere eintreten kann. Rund um die Messöffnung 6 sind an der Basisplatte 7 drei Stützorgane 7a, 7b und 7c angeordnet, welche dazu beitragen, dass das Messgerät auch auf gekrümmten Messoberflächen korrekt positioniert werden kann, so dass die Gerätenormale ganz oder zumindest weitestgehend mit der Normalen auf die Messoberfläche im Mittelpunkt des Messflecks (Figuren 9 und 14) zusammenfällt. Die Messöffnung 6 kann natürlich auch, wie z.B. in den Figuren 2-4 dargestellt, rechteckig ausgebildet sein.

In der Fig. 1 ist die schon erwähnte Gerätenormale eingezeichnet und mit DN bezeichnet. Sie steht senkrecht auf die Basisplatte 7 bzw. die darin befindliche Messöffnung 6 und verläuft (im Wesentlichen) durch den Mittelpunkt der letzteren.

In seinem generellen Aufbau entspricht das beschriebene Messgerät (mit Ausnahme der Stützorgane) im Grundsatz soweit herkömmlichen Messgeräten dieser Art, so dass der Fachmann diesbezüglich keiner weiteren Erläuterung bedarf.

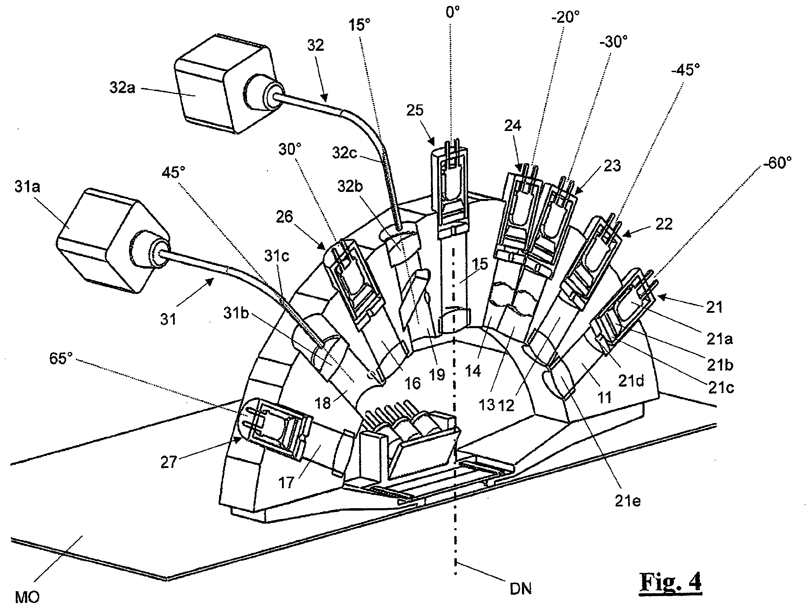

Die grundsätzliche Ausbildung der Messanordnung MA geht aus den Figuren 2-4 hervor. Sie umfasst einen ortsfest im Gehäuse H befestigten Bogenkörper 10, in dem alle optischen bzw. photoelektrischen Komponenten der Messanordnung MA im Wesentlichen in durchgehenden, radial verlaufenden Kammern 11-19 (Fig. 4) angeordnet sind. Im gezeigten Ausführungsbeispiel bestehen diese Komponenten aus sieben Beleuchtungseinrichtungen 21-27 und drei Aufpickeinrichtungen 31-33. Zusätzlich ist noch eine weitschweifig beleuchtende Beleuchtungseinrichtung 28 in unmittelbarer Nähe der Messöffnung 6 vorgesehen.

Die sieben Beleuchtungseinrichtungen 21-27 beleuchten einen Messfleck oder ein Messfeld MF (Figuren 9 und 14) an der Oberfläche eines Messobjekts MO gerichtet unter verschiedenen, auf die Gerätenormale DN bezogenen Beleuchtungswinkeln, und zwar unter nominell -60°, -45°, -30°, -20°, 0°, +30°, +45° und +65° (positive Zählung entgegen dem Uhrzeigersinn ausgehend von der Gerätenormalen DN). Mit nominell ist jeweils der Hauptstrahl bzw. die optische Achse des Beleuchtungsstrahlenbündels gemeint. Die Öffnungswinkel der Strahlenbündel liegen im Bereich von < +/-2° für Messgeometrieen nahe beim spekularen Reflex (Winkeldifferenz <= 25°) und bis etwa +/- 5°-10° für die Messgeometrien, welche grössere Winkeldifferenzen zum spekularen Glanzwinkel haben. Alle sieben Beleuchtungseinrichtungen 21-27 sind so angeordnet, dass die optischen Achsen bzw. Hauptstrahlen der von ihnen erzeugten Beleuchtungsstrahlenbündel in einer durch die Gerätenormale DN verlaufenden Ebene liegen, die im Folgenden kurz als System-Ebene SP bezeichnet und in Fig. 4 dargestellt ist.

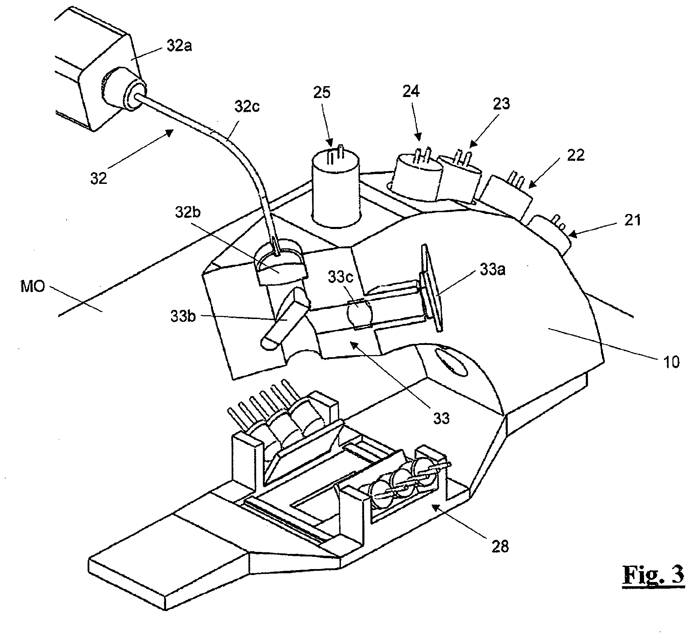

Zwei der drei Aufpickeinrichtungen 31-33 sind als örtlich integrale spektrale Messkanäle ausgebildet, die dritte Aufpickeinrichtung ist als örtlich auflösender Farbmesskanal ausgebildet. Sie empfangen das im Bereich des beleuchteten Messflecks des Messobjekts remittierte Messlicht unter Betrachtungswinkeln von +15° und +45°. Die beiden spektralen Messkanäle 31 und 32 umfassen zwei Spektrometer 31 a und 32a, denen das Messlicht mittels Einkoppellinsen 31b bzw. 32b und Lichtleiter 31c bzw. 32c zugeführt wird (Fig. 4). Der örtlich auflösende Messkanal 33 umfasst eine farbtaugliche (RGB) Kamera 33a, die über einen Strahlenteiler 33b und eine Linse 33c mit Messlicht beaufschlagt wird (Fig. 3). Der Strahlenteiler 33b befindet sich im Aufpick-Strahlengang des zweiten spektralen Messkanals 32 und lenkt einen Teil des Messlichts seitlich aus dem Bogenkörper 10 heraus auf die Kamera 33a. Die optischen Achsen der drei Messkanäle 31-33 liegen ebenfalls in der System-Ebene SP, wobei dies im Falle des örtlich auflösenden Messkanals 33 wegen dessen geknickten Strahlengangs nur für den Abschnitt zwischen dem Messobjekt MO und dem Strahlenteiler 33b gilt. Der zweite spektrale Messkanal 32 und der örtlich auflösende Messkanal 33 teilen sich also das Messlicht und empfangen dieses unter genau demselben Betrachtungswinkel.

Die beschriebene Messgeometrie ist genau umgekehrt im Vergleich zu den ASTM Standards E2194 und E2539, wo für Messungen an metallischen und perlmuttartige Effektpigmenten zwei gerichtete Beleuchtungen unter 15° und 45° und sechs gerichtete Spektralkanäle unter 0°,30°,65°, -20°, -30° und -60° definiert sind.

Die zusätzliche Beleuchtungseinrichtung 22 (-45°) ist für Glanzmessungen in Kombination mit dem ersten spektralen Messkanal 31 vorgesehen.

Die Beleuchtungseinrichtung 21 umfasst eine Primärlichtquelle 21a z.B. in Form einer Leuchtdiode (oder ggf. auch mehrerer Leuchtdioden), einen Kollimator 21b, eine Mischoptik (Homogenisator) 21c, eine Feldblende mit Apertur 2 1 d und eine Linse 21e. Die Feldblende mit Apertur 21d bildet eine Sekundärlichtquelle, deren Licht über die Linse 21e auf das Messobjekt gerichtet wird. Die übrigen sechs Beleuchtungseinrichtungen 22-27 sind identisch wie die Beleuchtungseinrichtung 21 ausgebildet. Um die Figuren zeichnerisch nicht zu überladen, sind die einzelnen Komponenten der Beleuchtungseinrichtungen 21-27 in Fig. 4 nur im Zusammenhang mit der Beleuchtungseinrichtung 21 mit Bezugszeichen versehen.

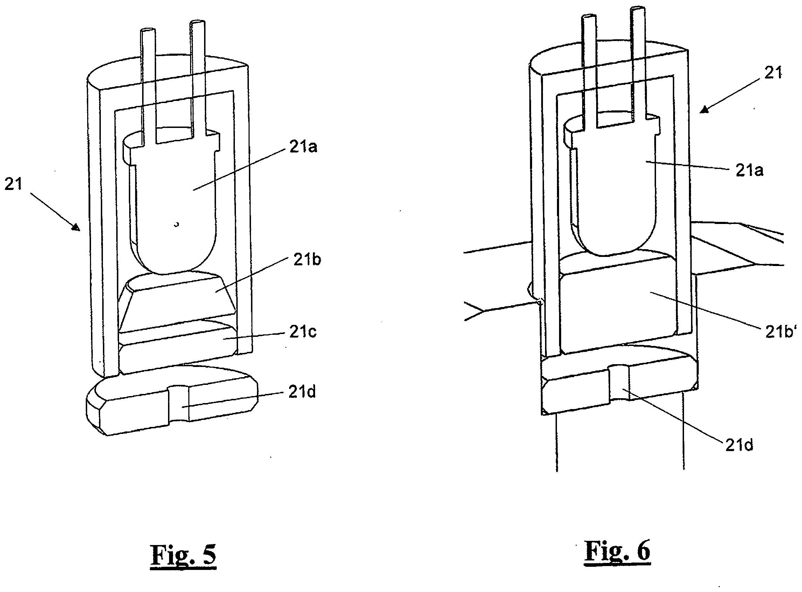

Die Fig. 5 zeigt die Beleuchtungseinrichtung 21 in grösserem Massstab. Die Fig. 6 zeigt eine Variante der Beleuchtungseinrichtung 21 (und entsprechend der übrigen Beleuchtungseinrichtungen 22-27), wobei der Kollimator und die Mischoptik (Homogenisator) zu einem einzigen optischen Bauteil 21b' zusammengefasst sind. Die Zusammenfassung zu einem Bauteil verdeutlicht, dass die optischen Funktionen Kollimation und Homogenisierung auch mit einem einzigen integrierten Bauteil erreicht werden kann. Desweiteren sind die optischen Funktionen Kollimation und Homogenisierung nicht streng getrennt. Beispielweise kann der Kollimator so gestaltet sein, dass er bereits zur Homogenisierung des Fernfeldes beiträgt.

Die Beleuchtungseinrichtungen 21-27 sind nachstehend gesamthaft auch als Beleuchtungssystem bezeichnet.

Die beiden Spektrometer 31a und 32a lösen das ihnen unter den Betrachtungswinkeln 45° bzw. 15° zugeführte Messlicht spektral auf und erzeugen pro Messung jeweils einen Satz von s Spektralmesswerten integral über den gesamten erfassten Messfleck des Messobjekts, wobei s die Anzahl der aufgelösten Wellenlängenbereiche ist. Die Spektrometer sind vorzugsweise durch Dioden-Array-Spektrometer realisiert, welche eine schnelle simultane Messung über das volle Spektrum ermöglichen.

Die RGB-Kamera 33a löst das ihr unter dem Betrachtungswinkel 15° zugeführte Messlicht sowohl örtlich als auch nach drei Farben RGB auf und erzeugt dementsprechend pro Messung einen Rohdatensatz von 3*n Messwerten, wobei n die Anzahl der aufgelösten Bildpunkte ist.

Die drei Aufpickeinrichtungen bzw. Messkanäle und die in ihnen enthaltenen Lichtwandler (Spektrometer und Farbkamera) sind nachfolgend auch kurz als Detektorsysteme bzw. Detektoren bezeichnet.

Für die Analyse von visueller Textur ist ein Detektor auf Basis einer örtlich auflösenden Kamera erforderlich, um die für die Textur-Analyse benötigte örtliche Bild-Infonnation zu erhalten. Das Kamera-Objektiv muss dabei spektrale Anforderungen, örtliche (Auflösungs-) Anforderungen und Winkel- und Geometrieanforderungen erfüllen. Das Ziel ist es, Bilddaten zu erfassen, die mit der visuellen Textur korrelieren. Allgemeine Anforderungen an die örtlich auflösende Aufpickeinrichtung 33 sind:
Die optische Auflösung der gemessenen Bild-Daten ist unter der visuellen Auflösungsgrenze bei Nahpunkt-Betrachtungsdistanz. Eine vernünftige Grenze kann unter der Annahme berechnet werden, dass die übliche Nahpunkt-Betrachtungsdistanz 250 mm und das Winkelauflösungsvermögen im besten Fall 60 Linienpaare pro Grad betragen. Das optische Design der Kamera muss eine bessere optische Auflösung aufweisen, d.h. die örtliche Grenzfrequenz muss über 14 Linienpaare pro mm in der Messebene liegen.

Um Informationsverlust zu vermeiden, muss das Sensorfeld der Kamera in der Bildebene genügend digitales Oversampling ermöglichen. Vorzugsweise wird ein Oversampling um mindestens einen Faktor 2 angewandt. Eine Bildpunkt-Grösse von ungefähr 20 µm in der Objekt-Ebene (Messfläche) ist ausreichend.

Der Konus- oder Apertur-Winkel des Aufpickstrahlengangs in der Objekt-Ebene muss relativ klein sein, vorzugsweise unter 1°. Der Aperturwinkel im Aufpickstrahlengang ist durch den Durchmesser der Apertur der Feldblende und die Brennweite des Objektivs bestimmt.

Die Detektorsysteme (Aufpickeinrichtungen) erfassen das Messlicht unter einem von 0° abweichenden Winkel zur Gerätenormalen. Dies erfordert die Anwendung der sog. Scheimpflug-Bedingung, um scharfe Abbildungsbedingungen über das Messfeld zu erreichen, falls die Fokustiefe in der Bildebene nicht ausreicht.

Ferner ist es von Vorteil, wenn in der Objekt-Ebene ein angenähert telezentrischer Strahlenverlauf implementiert wird, um winkelmässig konstante Messbedingungen über das gesamte Messfeld zu erreichen und Störungen und Vergrösserungsdifferenzen möglichst niedrig zu halten.

Die Beleuchtungseinrichtung 28 ist vorgesehen, damit das Messgerät auch einen Messmodus mit weitschweifigen Beleuchtungsbedingungen unterstützt. Die Beleuchtungseinrichtung 28 ist als LED-Hintergrundbeleuchtung ausgelegt, welche das Messobjekt direkt aus einem grossen Raumwinkel beleuchtet.

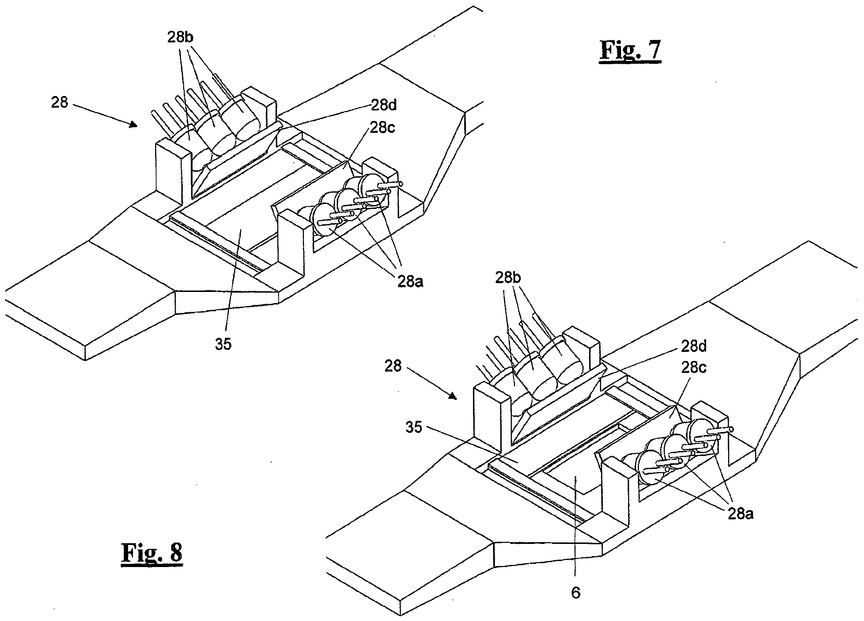

Die Beleuchtungseinrichtung 28 ist in den Figuren 7 und 8 im Detail dargestellt. Sie umfasst zwei beidseits der Messöffnung 6 angeordnete Reihen von weissen Leuchtdioden 28a und 28b und jeweils einer Reihe zugeordnet zwei geneigte Diffusorfilme 28c und 28d zur Homogenisierung der Beleuchtung. Die beiden LED-Reihen 28a und 28b sind von der Steueranordnung C getrennt ansteuerbar (Fig. 25).

Alternativ oder zusätzlich kann auch eine Ring-Beleuchtungseinrichtung vorgesehen sein, wie sie z.B. in den Farbmess-Standards CIE15.3 für die 45°/0°-Messgeometrie definiert ist. Eine Ring-Beleuchtung hat den Vorteil, dass sie lageunabhängige Messwerte liefert, d.h. dass die Drehstellung des Messgeräts auf dem Messobjekt keinen Einfluss auf das Messergebnis hat.

Das erfindungsgemässe Messgerät ist im dargestellten Ausführungsbeispiel ferner mit einer integrierten Weissreferenz in Form einer Weisskachel ausgestattet, welche für Kalibrationszwecke in die Strahlengänge der Beleuchtungseinrichtungen 21-27 und der Aufpickeinrichtungen 31-33 einbringbar ist. Im konkreten Ausführungsbeispiel besteht die Weisskachel aus einer an ihrer Oberseite ebenen Platte 35, welche knapp oberhalb der Messöffnung 6 senkrecht zur System-Ebene SP (elektrisch angetrieben) verschiebbar angeordnet ist. Beim nonnalen Messeinsatz des Messgeräts befindet sich die Weisskachel 35 in der in Fig. 8 gezeigten Stellung und gibt die Messöffnung 6 frei. Während des Kalibrationsvorgangs befindet sich die Weisskachel 35 in der in Fig. 7 gezeigten Stellung in den Strahlengängen der Beleuchtungseinrichtungen 21-27, wobei die Aufpickeinrichtungen 31-33 das von der Weisskachel zurückgestrahlte Licht empfangen. Die Verstellung der Weisskachel 35 erfolgt durch die Steueranordnung C (Fig. 25).

Die Weisskachel 35 liegt gegenüber der Oberfläche des Messobjekts MO (Messebene) erhöht. Wie man aus Fig. 9 anhand der für die Beleuchtungseinrichtungen 21 und 27 exemplarisch eingezeichneten Strahlengänge 21s und 27s gut erkennt, überlappen sich dadurch die von den einzelnen Beleuchtungseinrichtungen 21-27 ausgeleuchteten Bereiche auf der Weisskachel 35 nur teilweise und auch die Aufpickeinrichtungen 31-33 können direkt nur Licht aus Teilen der ausgeleuchteten Bereiche erfassen (siehe z.B. den exemplarisch für die Aufpickeinrichtung 31 eingezeichneten Strahlengang 31s).

Gemäss eines weiteren wichtigen Aspekts der Erfindung ist nun durch eine spezielle Ausbildung der Weisskachel dafür Sorge getragen, dass Beleuchtungslicht aus den seitlichen randnäheren beleuchteten Zonen der Weisskachel 35 zu deren zentraler Zone transportiert wird, wo es von den Aufpickeinrichtungen 31-33 erfasst werden kann.

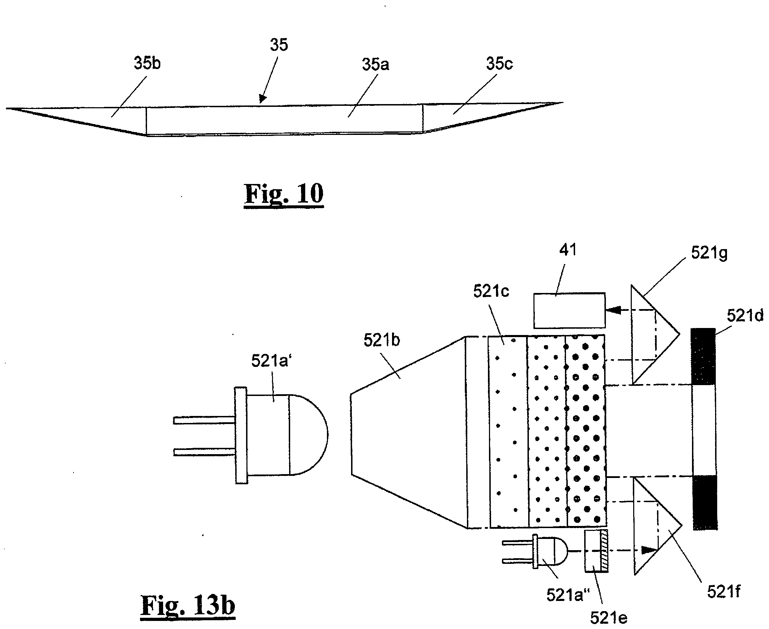

Die spezielle Ausbildung geht aus der Schnittdarstellung (Vertikalschnitt parallel zu der in Fig. 2 eingezeichneten System-Ebene SP) in Fig. 10 hervor. Die Weisskachel 35 besteht aus einem mittleren parallelepipedischen Abschnitt 35a und zwei seitlichen prismatischen Abschnitten 35b und 35c. Der mittlere Abschnitt 35a besteht aus einem zu 50% diffusen und zu 50% transmittierenden Glaskörper (oder Kunststoffkörper), die beiden seitlichen bzw. äusseren prismatischen Abschnitte 35b und 35c bestehen aus transparentem Glas (oder Kunststoff). Alle drei Abschnitte 35a, 35b und 35c sind an der Unterseite verspiegelt. Der Prismenwinkel der beiden prismatischen Abschnitte 35b und 35c beträgt etwa 5°.

Der mittlere Abschnitt 35a ist so bemessen, dass er möglichst vollständig im Erfassungsbereich der Aufpickeinrichtungen 31-33 liegt. In ihm auftreffendes Beleuchtungslicht wird so direkt von den Aufpickeinrichtungen 31-33 erfasst. In den beiden äusseren Abschnitten 35b und 35c auftreffendes Licht wird durch Mehrfachreflexion zum mittleren Abschnitt 35a geleitet und dann ebenfalls von den Aufpickeinrichtungen 31-33 erfasst.

Die Weisskachel 35 dient auch als mechanischer Verschluss des Messgeräts, um dessen Inneres, insbesondere die optischen Komponenten, vor Verschmutzung zu schützen.

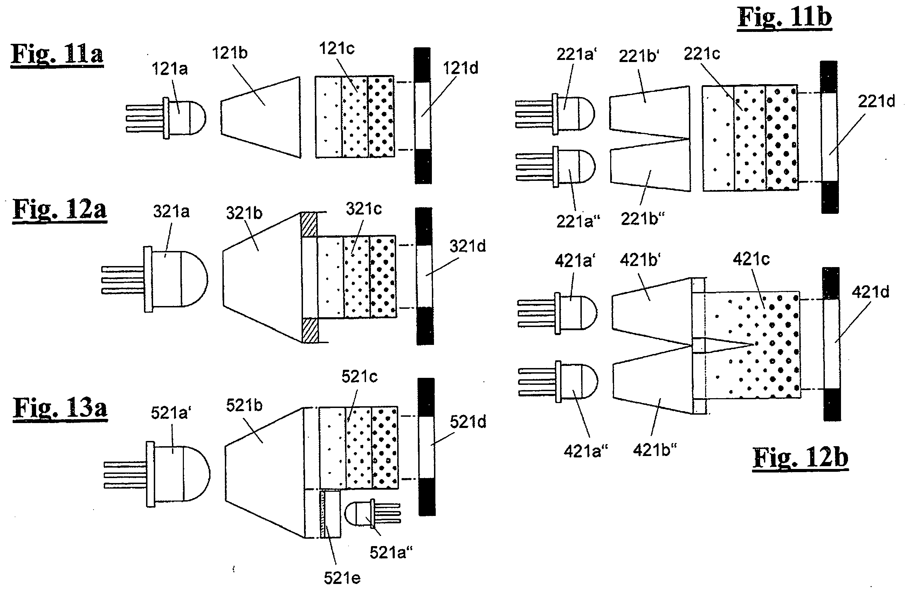

Die Figuren 11a, 11b, 12a, 12b, 13a und 13b zeigen schematisch verschiedene weitere Varianten von Beleuchtungseinrichtungen, gemäss welchen mindestens einige, vorzugsweise alle Beleuchtungseinrichtungen ausgebildet sein können.

Die in Fig. 11a dargestellte Beleuchtungseinrichtung entspricht im Wesentlichen der gemäss Fig. 5 und umfasst eine LED 121a als Primärlichtquelle, einen Kollimator 121b, einen Homogenisator (z.B. Lichtmischstab) 121c und eine Blende mit einer Apertur 121d, wobei letztere eine Sekundärlichtquelle bildet. Die nichtabbildenden Komponenten Kollimator 121b und Homogenisator 121c entkoppeln die sekundäre Lichtquelle 121d von der primären Lichtquelle 121a. Mit Entkopplung ist gemeint, dass die Homogenität der spektralen Radianz der sekundären Lichtquelle weitgehend unabhängig von Position und Eigenschaft der Primärlichtquelle ist. Etendue bzw. Radianz werden (abgesehen von Reflektionsverlusten, nicht idealer Kollimation und vorgehaltenen mechanischen Toleranzen) voll genutzt bzw. erhalten.

Die Beleuchtungseinrichtung der Fig. 11b ist analog zu der gemäss Fig. 11a aufgebaut, weist jedoch zwei (oder weitere) Primärlichtquellen 221a' und 221a"sowie zwei (oder entsprechend weitere) Kollimatoren 221 b' und 221 b" auf. Ferner ist wieder ein Homogenisator 221c und eine Blende mit einer Apertur 221 d vorhanden. Kollimatoren 221 b' und 221 b" und Homogenisator 221 c sind wieder so gestaltet, dass die Sekundärlichtquelle von den Primärlichtquellen entkoppelt ist. Durch den Einsatz von zwei oder mehreren LEDs als Primärlichtquellen können die spektralen Anforderungen an die Sekundärlichtquelle ggf. besser und/oder zuverlässiger erfüllt werden (Addition verschiedener Spektren).

Die Beleuchtungseinrichtung der Fig. 12a ist analog zu der gemäss Fig. 11a aufgebaut und weist eine LED 321a als Primärlichtquelle, einen Kollimator 321b, einen Homogenisator (z.B. Lichtmischstab) 321c und eine Blende mit einer Apertur 321d auf, wobei letztere eine Sekundärlichtquelle bildet. Bei dieser Variante ist die Etendue der Primärlichtquelle deutlich grösser als die Etendue der sekundären Lichtquelle. Die Radianz der sekundären Lichtquelle kann durch vorteilhafte Auswahl des verwendeten Teils der Etendue erhöht werden.

Die Beleuchtungseinrichtung der Fig. 12b ist analog zu der gemäss Fig. 12a aufgebaut, weist jedoch zwei (oder weitere) Primärlichtquellen 421a' und 421a" sowie zwei (oder entsprechend weitere) Kollimatoren 421b' und 421b" auf. Ferner ist wieder ein Homogenisator 421 c und eine Blende mit einer Apertur 421 d vorhanden. Die Etendue der Primärlichtquellen ist analog zu Fig. 12a grösser als die Etendue der Sekundärlichtquelle mit den gleichen Vorteilen wie im Zusammenhang mit Fig. 12a erläutert.

Die Beleuchtungseinrichtung der Fig. 13a ist analog zu der gemäss Fig. 12a aufgebaut und umfasst eine LED 521a' als erste Primärlichtquelle, eine LED 521a" als zweite oder zusätzlich Primärlichtquelle, einen Kollimator 521b, einen Homogenisator (z.B. Lichtmischstab) 521c und eine Feldblende mit einer Apertur 521d. Der nicht genutzte Teil der Etendue der Primärlichtquelle 521 a wird hier verwendet, um die zusätzliche LED 521a" in das System einzufügen. Vor dem nicht genutzten Abschnitt der Etendue, hier des Kollimators 521b, ist ein Spiegel 521e angeordnet. Der Spiegel 521e ist für wenigstens einen spektralen Abschnitt der Lichtes der Primärlichtquelle 521a' reflektierend. Der Spiegel 521e ist dichroitisch und nur für Licht der zusätzlichen Primärlichtquelle 521a" durchlässig. Die Primärlichtquellen 521 a' und 521a", der Kollimator 521 b, der Homogenisator 521c und der Spiegel 521e bilden eine Kavität, so dass zusätzliches Licht in die Apertur 521 d der sekundären Lichtquelle eingekoppelt wird (light recycling). Wenigstens die erste Primärlichtquelle 521a' ist für Licht aus den Primärlichtquellen 521a' und 521a" wenigstens teilweise reflektierend.

Die Fig. 13b zeigt eine Variante der in Fig. 13a dargestellten Beleuchtungseinrichtung, wobei das Licht der zusätzlichen Primärlichtquelle 521a" über ein Umlenkprisma 521f in den nicht genutzten Teil der Etendue, hier des Homogenisators 521c, eingefügt wird.

Unabhängig davon, ob zusätzliche Primärlichtquellen eingesetzt werden oder nicht, kann der nicht genutzte Teil der Etendue der Primärlichtquelle dazu verwendet werden, Licht für eine Referenzlichtmessung auszukoppeln. Darauf wird weiter unten noch näher eingegangen. Durch die sachgemässe Ausgestaltung des Homogenisators 521 c ist gewährleistet, dass das ausgekoppelte Licht mit der spektralen Radianz in der Apertur 521 d der sekundären Lichtquelle korreliert.

Es sei noch erwähnt, dass der "nicht verwendete Teil der Etendue" in den 2D-Darstellungen der Figuren 12a, 12b, 13a und 13b als nicht genutzter Teile der (Ausgangs-) Flächen der Optiken (Kollimator, Homogenisator) veranschaulicht ist, jedoch im Allgemeinen auch als nicht ausgenutzter Raumwinkelbereich aufgefasst werden kann.

Wie sich aus dem Vorstehenden ergibt, sind die Beleuchtungseinrichtungen modular und prinzipiell gleich aufgebaut. Die gerichteten Beleuchtungseinrichtungen überleuchten den von den Aufpickeinrichtungen erfassten Messfeldbereich. Die ASTM Standards für Messungen an metallischen oder perlmuttartigen Effektpigmenten fordern eine hohe Genauigkeit für die Beleuchtungswinkel. Gleichzeitig ist aber eine flexible Wahl der Lichtquellen wünschenswert, ohne dass die Winkeleigenschaften der gerichteten Beleuchtung beeinflusst werden. Dazu gehören der Einfallswinkel des Hauptstrahls, der Divergenzwinkel über das Messfeld und der Aperturwinkel. Dies wird erreicht durch die vorstehend beschriebene Ausbildung der Beleuchtungseinrichtungen mit einer primären Lichtquelle und einer davon entkoppelten sekundären Lichtquelle. Die sekundäre Lichtquelle ist durch eine präzise mechanische Apertur realisiert, welche genau auf die Kollimatorlinse ausgerichtet montiert ist. Die Grösse und Position der sekundären Lichtquelle in Kombination mit der Brennweite der Kollimatorlinse definieren die Winkeleigenschaften der Beleuchtungseinrichtungen. Die Grösse und die Position der sekundären Lichtquelle kann für die einzelnen Beleuchtungseinrichtungen verschieden sein.

Das Konzept mit sekundären Lichtquellen erfordert, dass die Lichtquellen im Nah- und Femfeld homogenisiert sind. Die Homogenisierung des Nahfeldes erstreckt sich über den Bereich der Apertur der Feldblende, die Homogenisierung des Fernfeldes über den Bereich des Aperturwinkels der Kollimationsoptik bzw. Linse in der Beleuchtungseinrichtung. Dabei kann zwischen spektraler und räumlicher Homogenisierung unterschieden werden. Spektrale Homogenisierung heisst, dass die Radianz der sekundären Lichtquelle für jeden Winkel und Ort eine möglichst gleiche spektrale Verteilung aufweist. Räumliche Homogenisierung heisst, dass die Radianz für jeden Ort der sekundären Lichtquelle möglichst gleiche Amplitude sowie möglichst gleiche Amplitude in Funktion des Winkels aufweist. In Kombination mit der Kollimationsoptik bzw. Linse in der Beleuchtungseinrichtung ist zudem ein spezifischer Verlauf der Radianz in Funktion des Winkels bevorzugt um eine bevorzugte räumliche Verteilung der Irradianz im Messfeld MF zu erhalten.

Dieses Ziel wird nach einem Aspekt der Erfindung erreicht durch eine geeignete Kombination der abbildenden und/oder nichtabbildenden Funktionsblöcke Kollimator, Homogenisator und Diffusor (optional). Ein typischer Homogenisator ist z.B. ein Lichtleiter aus Glas oder Kunststoff mit quadratischem Querschnitt. Die räumliche Homogenisierung mit Lichtleitern erzeugt in der Regel eine Inhomogenität im Fernfeld, die durch ein zusätzliches Diffusor-Element mit angepassten Streuwinkeln behoben werden kann.

Da die spektrale Analyse in den Aufpickeinrichtungen 31 und 32 erfolgt, müssen die Lichtquellen der Beleuchtungseinrichtungen über den gesamten interessierenden Spektralbereich genügend leistungsfähig sein. Der Spektralbereich erstreckt sich über den sichtbaren Wellenlängenbereich von 400 nm bis 700 nm. Für spezielle Anwendungen kann auch eine Ergänzung um UV und nahes IR erforderlich sein. Durch den Einsatz von LED Technologie können die spektralen Eigenschaften der Lichtquellen bzw. Beleuchtungseinrichtungen relativ flexibel realisiert werden. Weisse LEDs können dabei für die Erzeugung von über das ganze sichtbare Spektrum kontinuierlichem Licht eingesetzt werden. Zusätzliche LEDs, die ausserhalb des für weisse LEDs typischen Spektralbereichs emittieren, können den Spektralbereich der Beleuchtungseinrichtungen ergänzen. Dazu gehören vor allem LEDs, die im violetten, UV und NIR Bereich emittieren.

In der Praxis müssen nicht alle Beleuchtungseinrichtungen für den vollen Spektralbereich ausgelegt sein. Wenigstens eine der Beleuchtungseinrichtungen ist für den vollen Spektralbereich von 400 nm - 700 nm ausgebildet, die anderen Beleuchtungseinrichtungen können für einen reduzierten Spektralbereich ausgelegt werden. In diesem Fall wird die bei Verwendung dieser Beleuchtungseinrichtungen fehlende spektrale Information aus der spektralen Information der für den vollen Spektralbereich ausgelegten Beleuchtungseinrichtung interpoliert.

Für Glanzmessungen mit dem erfindungsgemässen Messgerät wird die unter -20° angeordnete Beleuchtungseinrichtung 24 eingesetzt, das remittierte Messlicht wird mit den unter 15° angeordneten Aufpickeinrichtungen 32 und 33 erfasst. Die Messfeldgrösse und die Divergenzwinkel der Beleuchtungs- und Aufpickstrahlengänge sind so gewählt, dass wenigstens an einer Stelle des Messfelds eine gerichtete Reflexionsbedingung für den Beleuchtungsstrahl und den Aufpickstrahl herrscht. An dieser Stelle wird der direkte Glanz von der Kamera detektiert. Die Winkelbedingungen zwischen den reflektierten Lichtstrahlen und den Aufpickstrahlen variieren über das Messfeld. Die mit der Kamera aufgenommenen Bilddaten ermöglichen für die anderen Stellen des Messfelds die Detektion der Reflexionscharakteristik nahe beim Spiegel-Winkel. Die Bilddaten können in vorkalibrierte örtliche Bereiche aufgeteilt werden, die vordefinierten Bereichen mit ähnlicher Winkeldifferenz zur jeweils lokalen Spiegelrichtung entsprechen.

Die unter -45° angeordnete Beleuchtungseinrichtung 22 kann ebenfalls für Glanzmessungen herangezogen werden, wobei für die unter 45° angeordnete Aufpickeinrichtung 31 die Bedingung spiegelnder Reflexion erfüllt ist.

In Fig. 14 sind die Beleuchtungs- und Aufpickverhältnisse bei einer solchen Glanzmessung dargestellt. Es wird die -20° zur Gerätenormalen DN ausgerichtete Beleuchtungseinrichtung 24 eingesetzt und das reflektierte Licht wird mittels der spektralen Aufpickeinrichtung 32 und der örtlich auflösenden Aufpickeinrichtung 33 gemessen, die beide +15° zur Gerätenormalen DN ausgerichtet sind. Die drei Strahlengänge der Beleuchtungseinrichtung 24 und der beiden Aufpickeinrichtungen 32 und 33 sind mit 24s, 32s und 33s bezeichnet. Wie aus der Figur zu erkennen ist, liegen die (in der Figur) rechten Randbereiche der Strahlengänge symmetrisch zur Gerätenormalen DN. Die -20°/+15°-Messgeometrie ist zwar nicht exakt normgerecht, reicht aber aus, um zuverlässige Aussagen über das Glanzverhalten des Messobjekts zu ermitteln.

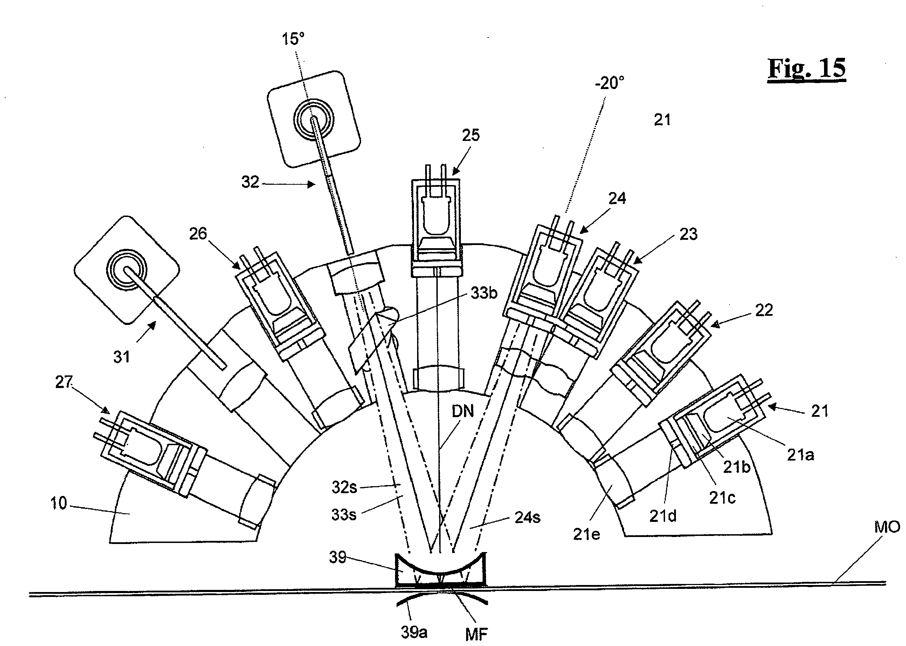

Die Glanz-Erfassung beim spekularen Glanz bei typisch 20° oder 45° und die Erfassung der Glanz-Verteilung um den spekularen Glanz, in einem Winkelbereich von typischerweise + / - 20°, kann gemäss der in Fig. 15 dargestellten Ausführungsform des Messgeräts auch erreicht werden, wenn ein optisches Element 39 im Bildfeld angeordnet wird, im einfachsten Fall eine Linse mit negativer Brechkraft. Die Linse 39 erzeugt virtuell (aus Sicht des Messgerätes) eine konvexe Bildfeldwölbung, die durch das Bezugszeichen 39a angedeutet ist. Es kann eine rotationssymmetrische Linse verwendet werden, vorzugsweise aber eine zylindrische Linse mit der Krümmung in der Geräteachse. Das optische Element bzw. die Linse 39 kann analog zur Weisskachel 35 über die Steueranordnung C (Fig. 25) in die mit 24s, 32s und 33s bezeichneten Strahlengänge eingebracht bzw. aus diesen entfernt werden. Natürlich sind Elemente mit weiter optimierter Formgebung denkbar.

Durch das optische Element 39 werden im begrenzten Bildfeld des Messgerätes aspekulare Winkel im Bereich des direkten Glanzes sichtbar und mit der Kamera quantitativ messbar. Die erfassbaren Quantitäten sind der spekulare Glanz der Materialoberfläche, der typischerweise gegeben ist durch den Fresnel-Reflex des Materials oder des Decklackes (bei mehrschichtig lackierten Messobjekten) und die Breite der Streukeule um den Reflex, die typischerweise bestimmt wird durch die Rauheit der Oberfläche. Im weiteren erlaubt die Analyse der Bild-Textur die Erfassung der Variation der Glanzeigenschaften von Effektpigmenten, die Variation der Dichte und Farberscheinung der Effektpigmente und so auch die typische Lebensdauer der Effekte mit änderndem Betrachtungswinkel. Diese Daten sind insbesondere interessant zu Erfassung der Material Erscheinung (Appearance), einerseits zur Visualisierung aber auch zur Material-Klassifizierung und Material-Suche in einer Material-Bibliothek oder einem Material-Katalog. Durch sogenanntes inverses Ray Tracing können Parameter für fotorealistische Computer Simulationen gewonnen werden, um bei Bedarf das untersuchte Material, also seine Apperance, typischerweise von einem Autolack, auf dem Computer auf ein ganzes Fahrzeug anzuwenden. Dieses Konzept ist auch von Interesse für die unterschiedlichsten Materialen wie Kunststoffe, Beläge, Papiere, Druckerzeugnisse, Textilien und mehr.

Internationale Standards schreiben für Glanzmessung andere Messgeometrien vor als für Mehrwinkel-Farbmessung. Der Standard ASTM E430 beschreibt eine Methode zur Messung des Glanzes von hochglänzenden Oberflächen mittels Goniophotometrie. Der Standard spezifiziert Spiegelglanzmessung bei 20° oder 30°.

Im vorliegenden Messgerät können die unter 15° angeordneten Aufpickeinrichtungen 32 und 33 auch auf eine alternative Weise für Glanzmessungen mit einem 20°-Spiegelwinkel benutzt werden. Zu diesem Zweck ist der erfasste örtliche Messbereich der Aufpickeinrichtung 33 bzw. der Kamera 33a in Richtung quer zur System-Ebene ausreichend gross gewählt. Der Sicht- bzw. Erfassungswinkel ist grösser als +/- 5° ausgelegt. Das erzeugt einen Aufpickwinkel von 20° an spezifischen ausserhalb der System-Ebene liegenden Stellen des Messfelds. Gemäss eines weiteren Gedankens der Erfindung ist eine zusätzliche Lichtquelle vorgesehen, welche diese spezifischen Stellen des Messfelds unter einem Einfallswinkel von 20° beleuchtet. Die zusätzliche Lichtquelle ist ausserhalb der System-Ebene angeordnet. Vorteilhafterweise ist das optische System dieser Lichtquelle so ausgelegt, dass es einen grösseren Divergenzwinkel über den örtlichen Erfassungsbereich der Kamera erzeugt. Dies ermöglicht die Erfassung eines grösseren Winkelbereichs der Glanzvariation über das Bild. Vorzugsweise ist die Lichtquelle als Punktlichtquelle ausgebildet, z.B. als ein divergierendes Strahlenbündel erzeugende Austrittsfläche eines optischen Lichtleiters. Die Lichtquelle kann auch eine eindimensional längliche Gestalt aufweisen, um einen grösseren Bereich zu beleuchten, in welchem die Bedingung für spiegelnde Reflexion erfüllt ist. Die längliche Lichtquelle kann z.B. durch eine lineare Anordnung von Lichtleitern realisiert sein.

Vorzugsweise kann auch eine zweite Lichtquelle derselben Art symmetrisch auf der gegenüberliegenden Seite der System-Ebene vorgesehen sein. Die mittels der beiden Lichtquellen erzeugten Bilddaten ermöglichen die Charakterisierung des anisotropen Verhaltens der Glanzverteilung in verschiedenen Richtungen.

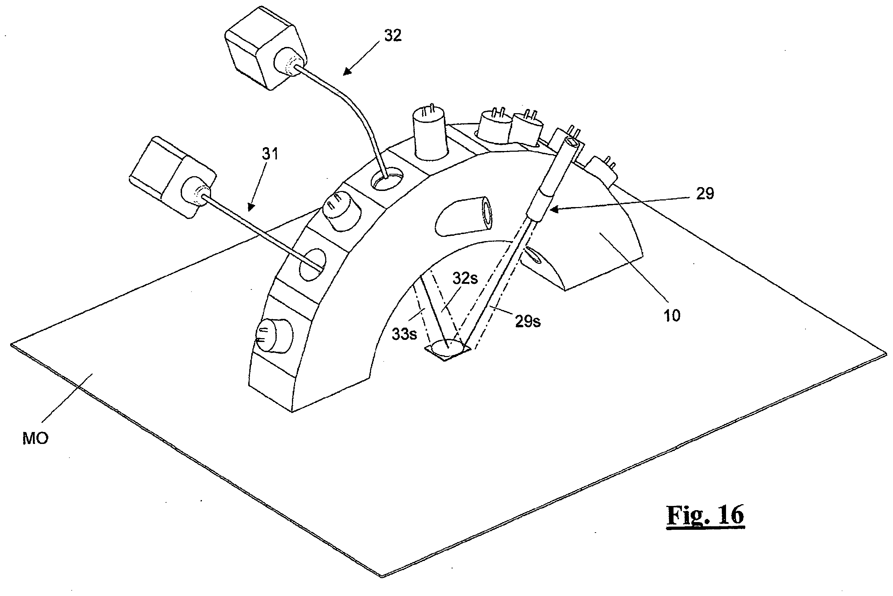

In Fig. 16 ist diese alternative Glanz-Messgeometrie dargestellt. Hierbei ist eine Punktbeleuchtungseinrichtung 29 vorgesehen, welche um 20° seitlich aus der System-Ebene heraus geneigt angeordnet ist und das Messobjekt also etwas von der Seite her beleuchtet. Der Strahlengang der Punktlichtquelle 29 ist mit 29s bezeichnet. Aufgefangen wird das reflektierte Licht wiederum von der spektralen Aufpickeinrichtung 32 und der örtlich auflösenden Aufpickeinrichtung 33, wobei die jeweiligen Strahlengänge mit 32s und 33s bezeichnet sind.

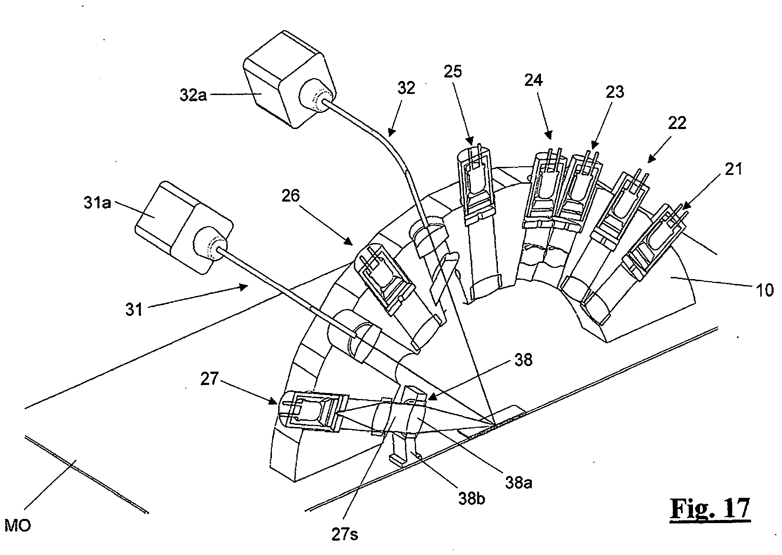

In Fig. 17 ist eine erweiterte Ausbildungsform des erfindungsgemässen Messgeräts dargestellt, wobei für Transluzenz-Messungen ein zusätzliches Element 38 vorgesehen ist. Das zusätzliche Element 38 umfasst eine Linse 38a, die in einem Linsenträger 38b montiert ist. Der Linsenträger 38b kann analog zur Weisskachel 35 über die Steueranordnung C (Fig. 25) senkrecht zur System-Ebene SP (Fig. 2) verschoben werden, so dass die Linse 38a in den mit 27s bezeichneten Strahlengang der 65°-Beleuchtungseinrichtung 27 eingebracht bzw. aus diesem entfernt werden kann. Bei in den Strahlengang 27s eingeschobener Linse 38a wird das Beleuchtungslicht fokussiert, so dass der beleuchtete Messfleck auf dem Messobjekt viel kleiner ist als ohne eingeschobene Linse 38a. Für die Transluzenz-Ermittlung werden zwei Messungen durchgeführt, und zwar einmal ohne eingeschobene Linse 38a und einmal mit in den Strahlengang 27s der Beleuchtungseinrichtung 27 eingeschobener Linse 38a. Anhand der aus den beiden Messungen erhaltenen Messwerte lassen sich Rückschlüsse auf das Transluzenz-Verhalten des beobachteten Messobjekts ableiten (spatial point spread function, beschrieben in der Publikation M. Goesele et al, "Disco - Acquisition of translucent objects », Proceedings ACM Siggraph 2004). Anstelle der Linse 38a kann auch eine Blende eingesetzt werden. Für die Textur-Erfassung wird vorzugsweise eine Beleuchtungseinrichtung mit grossem Winkelabstand zu den beiden Aufpickeinrichtungen verwendet, im konkreten Fall also die Beleuchtungseinrichtung 27.

Die ohne und mit eingeschobener Linse ermittelten spektralen Messwerte werden zur Bestimmung einer spektralen Transluzenz-Korrektur benutzt. Aus den spektralen Messwertdifferenzen der beiden Messungen wird ein spektraler Korrekturfaktor abgeleitet und auf alle anderen Messgeometrien (also Messungen unter Verwendung der Beleuchtungseinrichtungen 21-26) angewandt.

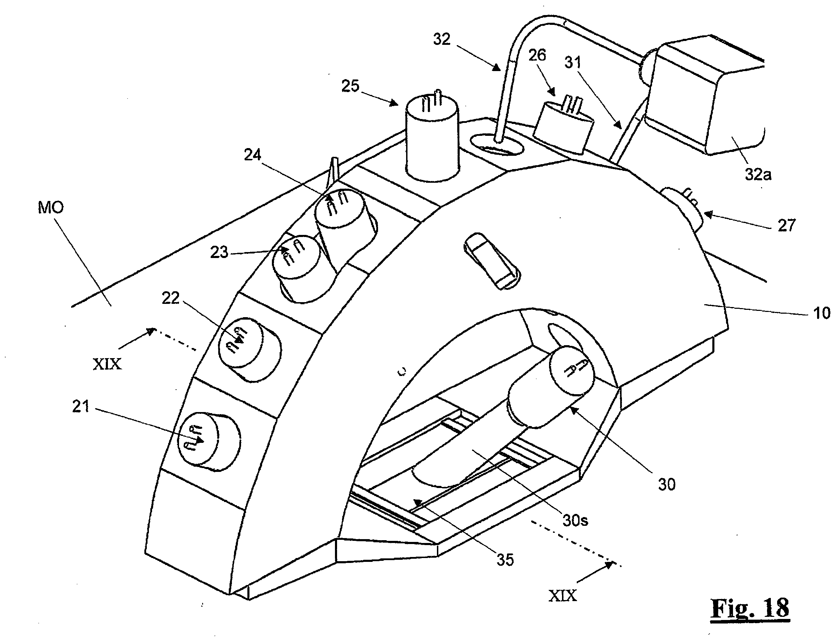

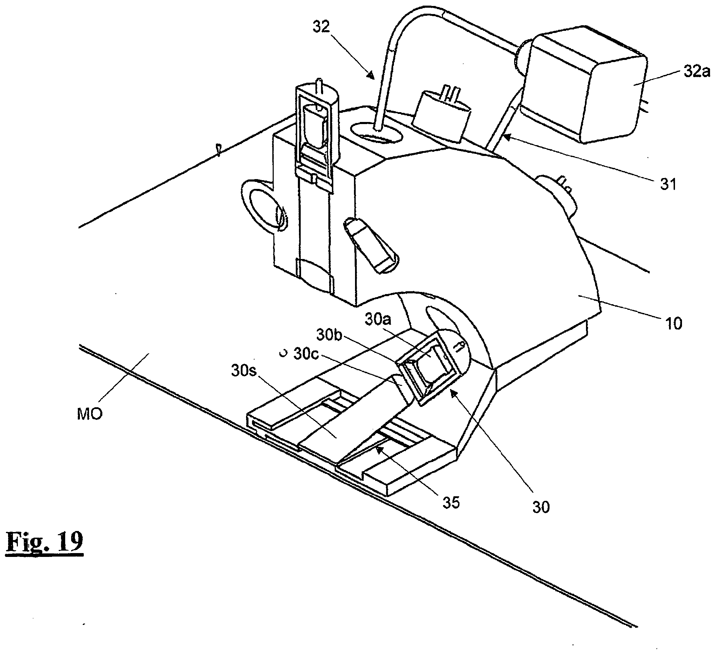

Die Figuren 18 und 19 zeigen eine weitere Ausbildungform des erfindungsgemässen Messgeräts, wobei eine zusätzliche Referenzbeleuchtungseinrichtung 30 vorgesehen ist, welche als Wellenlängenreferenz zur Re-Kalibrierung der spektralen Kalibration der beiden Aufpickeinrichtungen 31 und 32 bzw. deren Spektrometer 31 a und 32a dient. Die Referenzbeleuchtungseinrichtung 30 ist um ca. 20° aus der System-Ebene heraus gekippt angeordnet und beleuchtet die Weisskachel 35, wenn diese in die Strahlengänge der beiden Aufpickeinrichtungen 31 und 32 eingeschoben ist. Die Referenzbeleuchtungseinrichtung 30 umfasst eine Weisslichtquelle 30a z.B. in Form einer LED und einen hochpräzisen und stabilen dielektrischen Interferenz-Spektralfilter 30b mit mehreren schmalbandigen Durchlassbereichen, vorzugsweise mit scharf ausgeprägten Flanken, sowie eine Linse 30c. Der Strahlengang der Referenzbeleuchtungseinrichtung 30 ist mit 30s bezeichnet.

In der Firmware des Messgeräts ist eine kalibrierte spektrale Transmissionskurve der Lichtquelle/Filter-Kombination der Referenzbeleuchtungseinrichtung enthalten. Die Referenzbeleuchtungseinrichtung wird bei jeder Weisskachel-Kalibration verwendet und reflektiert das Licht über die Weisskachel in die Aufpickeinrichtungen.

Die Referenz-Beleuchtungseinrichtung 30 könnte, sofern es die Platzverhältnisse zulassen, wie die Beleuchtungseinrichtungen 21-27 in der System-Ebene SP angeordnet sein.

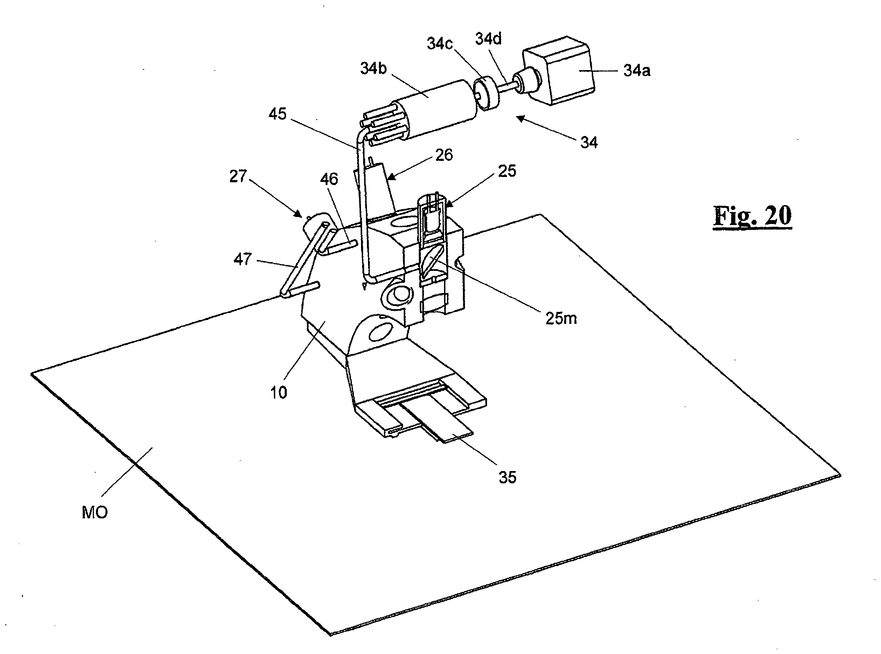

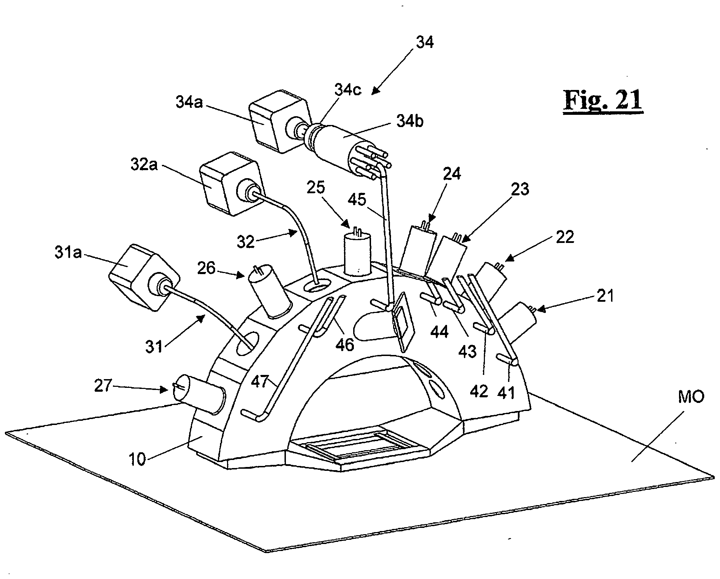

Die Figuren 20 und 21 zeigen eine weitere Ausbildungform des erfindungsgemässen Messgeräts, wobei jede der sieben Beleuchtungseinrichtungen 21-27 mit einem Referenzkanal ausgestattet ist, der einen Teil des Lichts auskoppelt und zu einer als Ganze mit 34 bezeichneten Referenzaufpickeinrichtung führt. Dazu sind in den Beleuchtungseinrichtungen 21-27 Strahlenteiler angeordnet, von denen in Fig. 20 nur der Strahlenteiler 25m der Beleuchtungseinrichtung 25 dargestellt und bezeichnet ist. Jeder Strahlenteiler lenkt das auskoppelte Licht in einen von sieben Lichtleitern 41-47. Die Referenzaufpickeinrichtung 34 umfasst ein vorzugsweise ebenfalls als Dioden-Array-Spektrometer ausgebildetes Spektrometer 34a, einen Lichtmischer 34b, eine Einkoppellinse 34c und einen weiteren Lichtleiter 34d. Die Lichtleiter 41-47 führen das ausgekoppelte Licht dem Lichtmischer 34b zu. Von diesem wird das Licht über die Einkoppellinse 34c und den weiteren Lichtleiter 34d dem Spektrometer 34a zugeführt. Mittels der Referenzaufpickeinrichtung 34 können die Beleuchtungseinrichtungen 21-27 kalibriert werden.

Anstatt mittels der Strahlenteiler kann die Auskoppelung des Lichts aus den Beleuchtungseinrichtungen 21-27 auch mittels vor dem nicht genutzten Teil der Etendue angeordneten Umlenkprismen (oder funktionsäquivalenten optischen Bauteils) erfolgen, welche das ausgekoppelte Licht über die Lichtleiter 41-47 in die Referenzaufpickvorrichtung 34 leiten. In Fig. 13b sind stellvertretend nur ein solches Umlenkprisma 521g sowie der zugehörige Lichtleiter 41 dargestellt. Durch diese Art der Licht-Auskopplung wird eine Reduzierung der Radianz der Sekundärlichtquelle vermieden.

Anstelle der Referenzkanäle mit Lichtleitern und einer Referenzaufpickeinrichtung 34 können die LED Lichtquellen alternativ auch mit einer einfacheren und kompakteren Referenzeinrichtung charakterisiert werden, wie z.B. einem RGB Sensor. Ein solcher Sensor ist sehr kompakt und lässt sich dementsprechend direkt bei den LED Mischern montieren, z.B. wie oben ausgeführt am nicht genutzten Ausgangsbereich des Kollimators. Zwar lässt ein solch vereinfachter Referenzkanal keine exakte spektrale Korrektur zu, der LED-Pegel und gewisse spektrale Veränderungen wie z.B. die relative Stärke des blauen LED-Peaks im Vergleich zum Phosphorpeak lassen sich aber sehr wohl korrigieren, so dass die grössten Drift-Fehler der LED Beleuchtung ebenfalls wegkalibriert werden können.

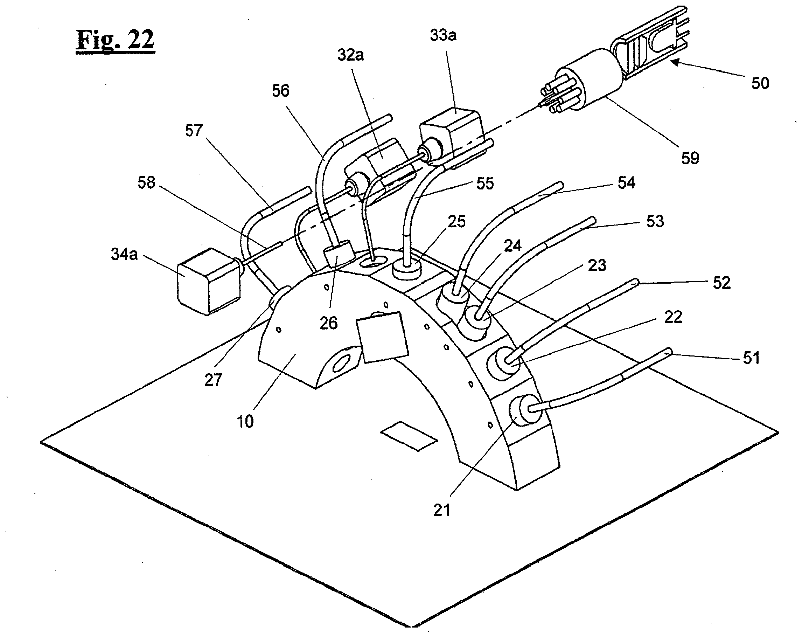

Die Fig. 22 zeigt eine alternative Realisierungsform der Beleuchtungseinrichtungen 21-27. Hierbei wird eine zentrale Lichtquelle 50 eingesetzt, die analog zu den in den Figuren 11a, 11b, 12a, 12b, 13a oder 13b gezeigten Lichtquellen gestaltet ist. Ihr Licht wird über einen Multiplexer 59 und Lichtleiter 51-57 den einzelnen Beleuchtungskanälen der Beleuchtungseinrichtungen 21-27 zugeführt. Über einen weiteren Lichtleiter 58 wird Referenzlicht zum Spektrometer 34a der Referenzaufpickeinrichtung 34 geführt. Auch die weiter vorne erwähnte Glanzbeleuchtungseinrichtung 29 kann auf diese Weise realisiert werden.

Durch diese Realisierungsform der Beleuchtungseinrichtungen 21-27 wird erreicht, dass nach der Verteilung des Ausgangslichtes des Homogenisators der Lichtquelle 50 durch den Multiplexer 59 das Licht in den Beleuchtungskanälen 21-27 und im Referenzspektralmodul 34a bestmöglich korrelieren.

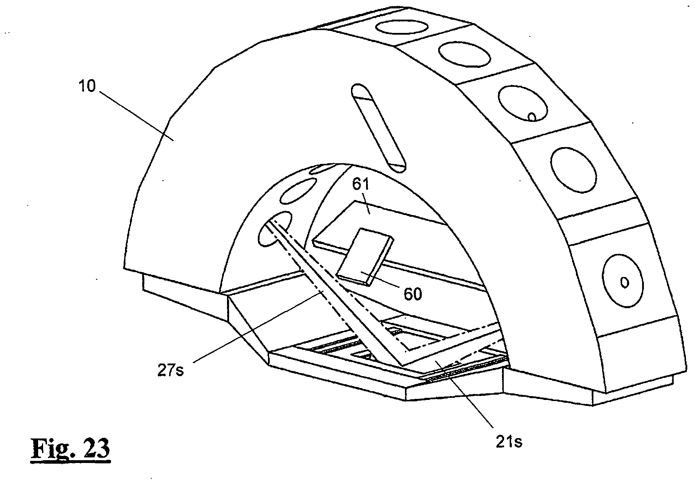

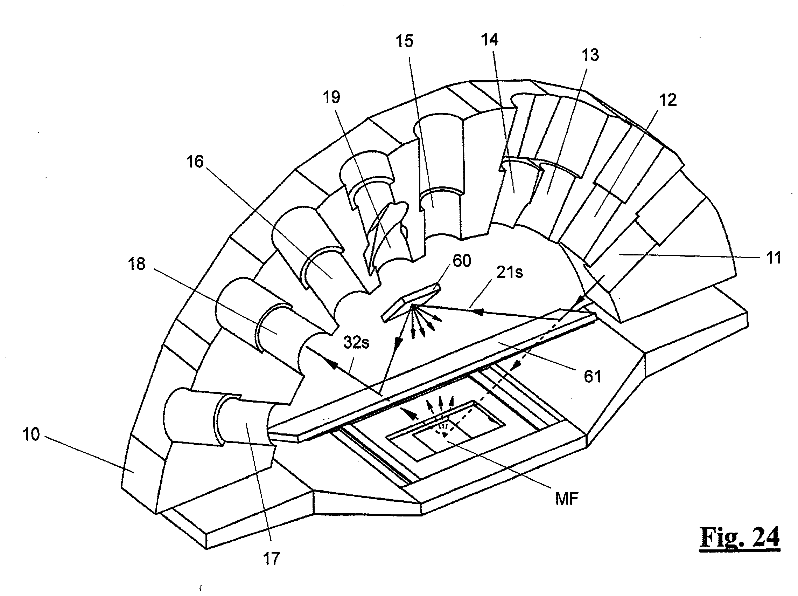

Eine andere Realisierungsform einer Weissreferenz ist in den Figuren 23 und 24 dargestellt. Hierbei sind im Bogenkörper 10 ein ebener Spiegel 61 und in fester räumlicher Zuordnung zu diesem ein diffuser Reflektor 60 gemeinsam so beweglich (z.B. schwenkbar) angeordnet, dass der Spiegel 60 vorübergehend in die Strahlengänge der Beleuchtungseinrichtungen 21-27 und der Aufpickeinrichtungen 31-33 eingebracht und wieder daraus entfernt werden kann. Die Fig. 23 zeigt den Spiegel 61 und den Reflektor 60 im Zustand ausserhalb der Strahlengänge, die Fig. 24 zeigt den Spiegel 61 und den Reflektor 60 im in die Strahlengänge eingebrachten Zustand. In den Figuren 23 und 24 sind stellvertretend nur die Strahlengänge 21s und 27s der (nicht gezeigten) Beleuchtungseinrichtungen 21 und 27 und der Strahlengang 32s der (nicht gezeigten) Aufpickeinrichtung 32 dargestellt. Die durchgezogen dargestellten Linien zeigen den jeweiligen Mittenstrahl bei eingeschwenktem Reflektor und Spiegel, die unterbrochen dargestellten Linien zeigen den Strahlenverlauf bei entferntem Reflektor und Spiegel (für den Fall, dass an der Stelle des Messfelds MF eine externe Weisskachel platziert ist).

Durch den Spiegel 61 wird das Messfeld MF in ein virtuelles Messfeld gespiegelt, wobei sich der diffuse Reflektor 60 am Ort des virtuellen Messfelds befindet. Der diffuse Reflektor 60 bildet die eigentliche Weissreferenz bzw. Weisskachel und wird über den Spiegel von den Beleuchtungseinrichtungen 21-27 beleuchtet. Die Rückstreuung des diffusen Reflektors wird über den Spiegel 61 von den Aufpickanordnungen 31-33 genau so gemessen, wie wenn sie vom realen Messfeld herkäme. Auch die Beleuchtung des virtuellen Messfeldes bzw. Reflektors 60 ist identisch zum Messfeld. Die Winkel/Ortsverhältnisse bei dieser Ausbildung der Weissreferenz sind also identisch zu einer Kalibration mit einer Weisskachel im (realen) Messfeld. Der Spiegel 61 und der diffuse Reflektor 60 (die eigentliche Weisskachel) können auch zu einem einzelnen Bauteil mit einem Glas- oder Kunststoffkörper kombiniert werden.

Alternativ ist ferner auch noch die folgende, eine kompaktere Bauweise ermöglichende Variante möglich. Hierbei ist der diffuse Reflektor 60 (die eigentliche Weisskachel) nicht mehr als vollständig opaker Reflektor, sondern als semi-transparenter Film oder als Matrix aus transparenten und opaken Teilbereichen aufgebaut. Somit muss der Reflektor bzw. das virtuelle Messfeld nicht mehr vollständig ausserhalb der Strahlengänge der Beleuchtungseinrichtungen 21-27 und der Aufpickeinrichtungen 31-33 liegen, womit die Grösse der Kombination Spiegel/Reflektor stark reduziert werden kann.

Die Grösse des Messfelds und die Grösse der optischen Komponenten hängen für gerichtete Messgeometrien linear zusammen. Die Grösse des Messfelds muss in Abhängigkeit der örtlichen lateralen Grössenvariation auf der Oberfläche des Messobjekts gewählt werden, um eine statistische Repräsentation der örtlich variierenden Oberflächeneigenschaften des Messobjekts zu enthalten. Die Grösse der optischen Systeme wird in Abhängigkeit der Eigenschaften des zu messenden Materials gewählt. Durch Verwendung desselben Beleuchtungssystems kann das Messinstrument mit einem kleineren Messfeld realisiert werden, wobei nur die Aufpickeinrichtungen mit einem kleineren Sichtfeld implementiert werden durch Veränderung der fokalen Eigenschaften des Linsensystems und durch eine zusätzliche mechanische Apertur in der Ebene des Messfelds.

Die verschiedenen Messfunktionen des Messgeräts für spektrale Farb-, visuelle Textur- und Glanz-Charakterisierung haben ähnliche Anforderungen auf der Beleuchtungsseite aber verschiedene Anforderungen auf der Detektorseite, z.B. (örtlich) integrale Messung über das Messfeld und örtlich aufgelöste Messung.

Gemäss des grundlegenden Gedankens der Erfindung werden beim Messgerät Beleuchtungskomponenten geteilt, d.h. für verschiedene Funktionen eingesetzt, und unterschiedliche Messerfordernisse werden in Aufpickeinrichtungen mit demselben Betrachtungswinkel verlagert. Dieses Konzept erlaubt eine kompakte und kosteneffektive mechanische Lösung mit kurzen Gesamt-Messzeiten aufgrund simultaner Messdatenerfassung. Ferner erzeugt dieses Konzept konsistente Messdaten für verschiedene Materialeigenschaften beim selben Betrachtungswinkel. Die Messdatensätze werden zur Berechnung von Appearance Daten bei verschiedenen Betrachtungsdistanzen oder verschiedenen Messbedingungen wie z.B. Beleuchtungsveränderungen benutzt. Die Fig. 25 zeigt blockschematisch die elektrische Zusammenschaltung der einzelnen Komponenten des erfindungsgemässen Messgeräts. Die Lichtquellen der Beleuchtungseinrichtungen 21-27,28,29 und 30 werden von der rechnerbasierten Steueranordnung C gesteuert. Letztere steuert auch die beiden Spektrometer und die Kamera der Aufpickeinrichtungen 31-33 und das Spektrometer der Referenzaufpickeinrichtung 34 und verarbeitet deren Messsignale. Ferner steuert die Steueranordnung C die Bewegung der Weisskachel 35 und des Linsenträgers des zusätzlichen Elements 38 für Transluzenzmessungen. Die Steueranordnung C zeigt Messergebnisse oder Benutzerhinweise auf der Anzeigeanordnung 4 an und nimmt Bedienungsbefehle von den Bedienungsorganen 8 entgegen. Ausserdem ist eine Kommunikationsschnittstelle 9 vorgesehen, über welche die Steueranordnung C mit einem externen Rechner verbindbar ist und Daten an diesen übertragen und ggf. auch Steuerbefehle entgegennehmen kann. Die Aufbereitung der rohen Messdaten erfolgt vorzugsweise (aber nicht zwingend) durch die Steueranordnung C im Gerät selbst, die Auswertung der (aufbereiteten Messdaten) kann auch in einem externen Rechner vorgenommen werden.

Die Messung von Appearance Eigenschaften erfordert kalibrierte spektrale Reflektanzfaktor-Messwerte für alle Mess-Geometrien des Mehrwinkel-Messgeräts. Theoretisch könnte dies mittels einer spektral auflösenden Kamera implementiert werden. Spektrale und multi-spektrale Kamera-Technologien sind z.B. in der Publikation J. Hardeberg, "Acquisition and reproduction of color images: colorimetric and multi-spectral approaches", Ph.D Thesis, 1999 beschrieben. Multi-spektrale bildgebende Abtastung (imaging) erzeugt Bilddaten für mehr als drei Farben. Die gegenüber den normalen drei Farben (meist RGB) zusätzliche Farbinformation wird verwendet, um eine genauere Konvertierung der Bilddaten in einen absoluten Farbraum (z.B. CIEXYZ oder sRGB) zu erreichen. Es ist zweckmässig, einen Farbraum zu verwenden, der mit den gemessenen Reflektanz-Werten linear verknüpft ist.

Die Bilddaten müssen für die Radianz des remittierten Lichts im Aufpickstrahlenbündel der Kamera absolut kalibriert sein. Dies wird unter Einsatz der integrierten Weisskachel durch eine absolute spektrale Reflektanz-Kalibration für jede Messgeometrie (Beleuchtungs-/Aufpickeinrichtungskombination) erreicht.

Effekt-Materialien können grosse Helligkeitsschwankungen in den Bilddaten erzeugen, so dass eine einzelne Messung den Dynamikbereich der Kamera übersteigt. Dieser Problematik wird durch Hoch-Dynamik-Bereich (HDR) Detektionsverfahren begegnet, wie sie z.B. in der Publikation M. Goesele et al., »Color calibrated Dynamic Range Imaging with ICC profiles », Proc. 9th IS&T color Imaging Conference, Scottsdale, Arizona, USA, 2001, 286-290 beschrieben sind. Dabei werden mehrere Sätze von Bilddaten mit unterschiedlichen Belichtungszeiten (Integrationszeiten) gemessen. Jeder Bilddaten-Satz wird auf die jeweilige Integrationszeit normalisiert und mit der Weisskalibration in dieselben physikalischen Reflektanz-Einheiten transferiert. Diese Vorgehensweise ermöglicht eine gewichtete Verschmelzung der Bilddaten-Sätze in einen einzigen Bilddatensatz mit erhöhtem Dynamik-Umfang.

Im Interesse geringerer Komplexität und niedrigerer Produktionskosten wird gemäss eines grundlegenden Gedankens der Erfindung in der örtlich auflösenden Aufpickeinrichtung 33 keine Spektral-Kamera, sondern eine (vergleichsweise einfache und kostengünstige) RGB Kamera mit einer Bayer-Filteranordnung auf dem eigentlichen Sensorfeld der Kamera eingesetzt. Die erforderliche spektrale Genauigkeit wird gemäss der Erfindung durch Bezug der unter demselben Beobachtungswinkel angeordneten spektralen Aufpickeinrichtung 32 erreicht. Die Strahlengänge der beiden Aufpickeinrichtungen 32 und 33 sind mittels des Strahlenteiles 33c aufgeteilt. Der Strahlenteiler kann Polarisierungseffekte verursachen, welche unerwünscht sind, z.B. weil Effekt Pigmente partiell polarisiertes Licht reflektieren können. Um die Polarisationsabhängigkeit zu minimieren ist die Strahlenteiler-Oberfläche um 45° aus der System-Ebene herausgedreht, wobei das Messlicht für die Kamera aus der System-Ebene herausgeleitet wird. Diese Massnahme gleicht die s und p Polarisationskomponenten aus, welche orthogonal zur System-Ebene stehen.

Für Messanwendungen, welche präzise Farbinformationen erfordern, werden bei jeder Messgeometrie (Kombination Beleuchtungs-/Aufpickeinrichtung) die spektralen Messdaten verwendet. Die spektralen Messdaten werden auch zur Erhöhung der Farbgenauigkeit der Farbbilddaten herangezogen. RGB Kameras können mit aus dem Color Management bekannten Methoden farbkalibriert werden, beispielsweise durch Anwendung eines ICC Kamera Profils. Die erreichbare Farbgenauigkeit ist dabei aber begrenzt und durch Metamerie-Effekte beeinträchtigt (Detektor- und Beleuchtungsmetamerie). Gemäss eines wichtigen Aspekts der Erfindung wird die kolorimetrische Genauigkeit der Farbbilddaten durch Korrektur anhand der aus den spektralen Messdaten erhaltenen Farbinformation erhöht. Dazu wird der Farbwert jedes Bildpunkts so korrigiert, dass der daraus durch Mittelung über das Messfeld berechnete Farbwert mit dem sich aus der spektralen Messung ergebenden integralen Farbwert übereinstimmt. Dies ermöglicht die gemittelte Farbinformation im Bild an unterschiedliche Beleuchtungsspektren anzupassen. Die visuelle Textur-Analyse wird anhand der relativen Farbvariation im Bild vorgenommen, welche typischerweise genauer als die absolute Farbinformation und ausreichend für die meisten Textur-Analyse-Anwendungen ist (vgl. z.B. die Publikation Haralick, "Textural features for image classification" from 1973 IEEE Transactions on systems, man and cybernetics, Vol. SMC-3, No. 6, Nov. 1973, pp.610-621).

Das Detektorsystem erzeugt für jede Messgeometrie (Kombination Beleuchtungs-/Aufpickeinrichtung) einen Satz von farbkalibrierten HDR Bilddaten und (örtlich integralen) spektralen Reflektanzdaten. Die Farbbilddaten können mit den spektralen Daten korrigiert werden, um konsistente (örtliche) Mittelwert-Farbinformationen der Bilddaten zu erzeugen. Die Bilddaten enthalten als örtliche Information die über das Messfeld variierende Farbe oder Glanzeigenschaften des Messobjekts.

Die farbkalibrierten HDR Bilddaten liegen in einer Auflösung vor, die über der Auflösungsgrenze des menschlichen Auges liegt. Mit diesen Bilddaten als Eingangsdaten wird ein geeignetes Appearance Bild berechnet, das mit dem visuellen Bildeindruck bei einer bestimmten Betrachtungsdistanz übereinstimmt. Dazu ist die Anwendung eines Farb-Appearance Modells mit Anpassung an verschiedene örtliche Auflösungen erforderlich.

Das Sichtfeld (der erfassbare Bereich) der örtlich auflösenden Aufpickeinrichtung 33 ist gleich oder grösser ausgelegt als das Sichtfeld der spektralen Aufpickeinrichtungen 31 und 32. Für die Farbkorrektur der Bilddaten wird nur der partielle Bildinhalt berücksichtigt, der dem überlappenden Bereich der Sichtfelder entspricht.

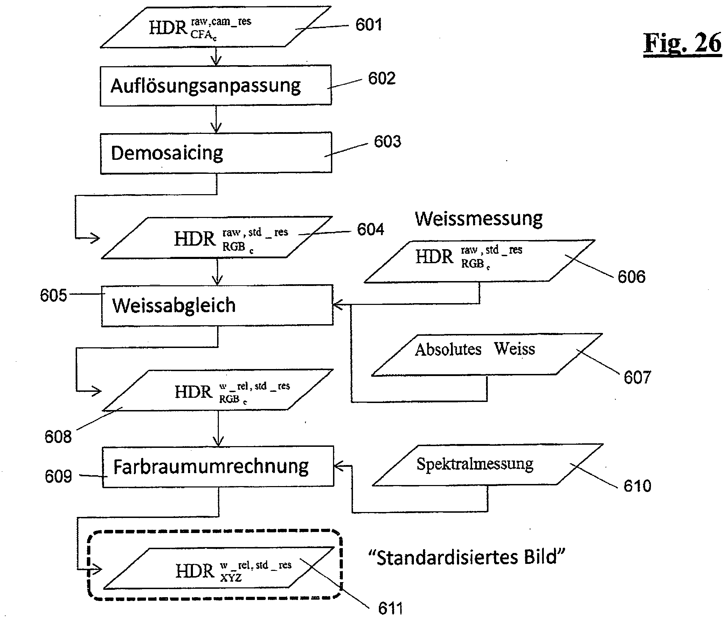

Die Fig. 26 zeigt blockschematisch die einzelnen Schritte der oben skizzierten Messdatenaufbereitung, wobei aus den rohen Bilddaten der Kamera 32a ein farbkalibrierter, korrigierter und standardisierter Farbbilddatensatz (Ausgabebild) erzeugt wird. Diese Datenaufbereitung findet in der Steueranordnung C statt, auf der dazu eine passende Software SW (Fig. 25) läuft. Die Datenaufbereitung könnte selbstverständlich auch an einem externen Rechner durchgeführt werden.

Den Ausgangspunkt bilden die HDR Farbbilddaten der Kamera (Block 601), die aus mehreren dunkelkompensierten Einzelbelichtungen (Messungen mit unterschiedlichen Integrationszeiten) erstellt sind (siehe weiter oben). Die Farbbilddaten zeigen ein Farbfiltermuster. Das Signal ist proportional zum einfallenden Licht. Die optische und räumliche Auflösung ist kameraspezifisch.

In einem ersten Schritt (Block 602) wird eine Auflösungsanpassung vorgenommen. Dabei werden die räumliche und optische Auflösung so angepasst, dass sie einer definierten Ausgabeauflösung (Ziel-Auflösung) entsprechen. Aus Stabilitäts- und Genauigkeitsgründen ist die Ausgabeauflösung meist gröber als die Eingangsauflösung. Damit wird die Bildgrösse kleiner.

Im nächsten Schritt (Block 603) erfolgt ein sogenanntes Demosaicing. Dabei werden die örtlich getrennten Farbpixel zu einem Farbpixel mit die Farbkanälen umgerechnet. Im gleichen Schritt werden noch Massnahmen getroffen, um das Farbrauschen zu verkleinern.

Das Ausgabebild soll weiss-relativ sein. Wie bei der Spektralmessung soll es relativ zum perfekt reflektierenden Diffusor sein. Dazu wird das nach der Demosaicierung vorliegende Bild (Block 604) durch eine Weissmessung inklusive deren Korrektur zum absoluten Weiss dividiert (Blöcke 605, 606, 607). Das weiss-relative Bild ist durch den Block 608 symbolisiert.

Als letzter Schritt erfolgt eine Farbraumanpassung (Block 609). Durch die Verfügbarkeit einer Spektralmessung (Block 610) mit derselben Messgeometrie kann der Farbraum noch genauer vom Gerätefarbraum zu einem Standard-Farbraum wie z.B. CIE XYZ oder sRGB transformiert werden.

Das resultierende Bild ist das gewünschte standardisierte Ausgabebild (Block 611) mit definierten Eigenschaften: räumliche Auflösung, optische Auflösung (meistens gleich wie räumliche Auflösung), Skala relativ zum absoluten Weiss, Farbraum CIE XYZ oder sRGB. Dieses geräteunabhängige standardisierte Bild wird dann als Grundlage für die Berechnung von entsprechenden Texturgrössen anhand geeigneter Algorithmen verwendet.

Das vorstehend erläuterte, erfindungsgemässe Messgerät ist insbesondere für Messungen an Effekt-Pigmente enthaltenden Messobjekten ausgelegt und optimiert. Selbstverständlich kann das erfindungsgemässe Konzept auch an andere Aufgaben mit anderen Messgeometrien und anderen Beleuchtungs- und Beobachtungswinkeln angepasst werden.

Das vorstehend beschriebene Handmessgerät ist für die eigentlichen Messzwecke mit sieben Beleuchtungseinrichtungen und drei Aufpickeinrichtungen ausgestattet. Es ist möglich, andere Kombinationen von Beleuchtungs- und Aufpickeinrichtungen zu verwenden. Die Anzahl der Beleuchtungseinrichtungen kann reduziert werden, wobei ein Minimum von drei gerichteten Beleuchtungseinrichtungen mit verschiedenen Beleuchtungswinkeln erforderlich ist, z.B. ein erster Winkel nahe bei einem die Bedingung für spiegelnde Reflexion erfüllenden Winkel, ein zweiter Winkel von 45° und ein dritter Winkel weit weg von einem die Bedingung für spiegelnde Reflexion erfüllenden Winkel. Ausserdem müssen die Beleuchtungseinrichtungen nicht zwingend in einer Ebene angeordnet sein. Die Aufpickeinrichtungen können entsprechend ihrer Aufgabe (integrale spektrale oder örtlich aufgelöste Messung) oder nach Anzahl variiert werden (ein oder zwei Systeme).

Für die Erfassung der gesamten Appearance-Eigenschaften (Material-Erscheinung) ist es wesentlich, auch makroskopische Material-Höhenvariationen zu erfassen. Die interessanten Eigenschaften sind die Winkel-Verteilung der lokalen OberflächenNormalen (Normal Map) und deren Integral, die Höhen-Verteilung (Height Map). Je nach Beleuchtungsbedingungen und Lichtverteilung (Ambient Map) werden z. B. Berge und Krater sichtbar. Da das erfindungsgemässe Messgerät Kameras und Beleuchtungen aus verschieden Richtung aufweist, ist es möglich, aus der auftretenden Helligkeitsverteilung bei einer oder mehreren Beleuchtungsrichtung(en) mit Methoden, die unter dem Begriff "Photometric Stereo" bekannt sind, die Normal Map zu bestimmen und daraus über eine Integration die Height Map. Sofern mindestens drei Beleuchtungen, die nicht auf einer Linie liegen, vorhanden sind, ist unter Annahme einer approximativ Lambert'schen Streucharakteristik des Materials auch Farb- und Helligkeits-Variationen (Albedo Map) von Variationen der Flächennormalen zu unterscheiden und separat zu bestimmen. Dies kann mit Hilfe der beidseitig ausserhalb der Geräte-Normalen (Geräte-Achse) angeordneten und individuell ansteuerbaren weitschweifenden Beleuchtungen erreicht werden. Gegebenenfalls kann das Messgerät zu Erfassung von Anisotropien auch um typischerweise 90° um seine eigene Achse gedreht zu Erfassung einer weiteren Ansicht werden.

Bei Appearance Eigenschaften ist die Homogenität der Probe und die Isotropie typischerweise nicht erfüllt. Deshalb macht es Sinn, Messungen an verschiedenen Punkten aufzunehmen und auch das Messgerät an einem Proben-Ort um seine Achse zu drehen.

Der Sinn aller obigen Messungen ist die Möglichkeit, das Material unter beliebigen Beleuchtungsbedingungen und Betrachtungsbedingungen aber auch auf beliebig geformten 3D-Objekten angewandt zu visualisieren, sowie die entsprechenden Appearance-Eigenschaften wie Glanz, Transluzenz und Topographie separieren und bestimmen zu können.

Das vorstehend beschriebene Handmessgerät ist als autonomes Messgerät ausgeführt und enthält alle für den Messbetrieb erforderlichen Bedienungs- und Anzeigeorgane sowie eine eigene Stromversorgung. Darüber hinaus ist es auch mit einer Schnittstelle zur Kommunikation mit einem externen Rechner ausgestattet, wobei mit dem Rechner sowohl Messdaten als auch Steuerungsdaten ausgetauscht werden können. Das Handmessgerät kann aber selbstverständlich auch als Messperipherie zum Einsatz in Verbindung mit einem steuernden und Messdaten auswertenden Rechner ausgebildet sein. In diesem Fall muss das Messgerät keine eigenen Bedienungs- und Anzeigeorgane aufweisen und wird - wie jedes andere Rechnerperipheriegerät - vom übergeordneten Rechner gesteuert. Gegebenenfalls kann auch die Stromversorgung über den externen Rechner erfolgen.

## Patentansprüche

1. Handmessgerät zur Erfassung des visuellen Eindrucks eines Messobjekts mit einer Messanordnung (MA), einer elektronischen Steueranordnung (C) und einem die eine Messanordnung (MA) und die elektronische Steueranordnung (C) aufnehmenden Gehäuse (H) mit einer Messöffnung (6), durch welche hindurch die Beleuchtung eines Messfelds (MF) auf einer Oberfläche eines Messobjekts (MO) und das Aufpicken des vom Messfeld (MF) zurückgestrahlten Messlichts erfolgt, wobei die Messanordnung (MA) eine Anzahl von Beleuchtungseinrichtungen (21-27) zur Beaufschlagung des Messfelds (MF) mit Beleuchtungslicht in mindestens drei auf eine Gerätenormale (DN) bezogenen Beleuchtungsrichtungen und eine Anzahl von Aufpickeinrichtungen (31-33) zur Erfassung des Messlichts in mindestens einer auf die Gerätenormale (DN) bezogenen Beobachtungsrichtung umfasst, wobei mindestens eine spektrale Aufpickeinrichtung (32) zur örtlich integralen spektralen Ausmessung des vom Messfeld zurückgestrahlten Messlichts und mindestens eine bildgebende Aufpickeinrichtung (33) zur örtlich aufgelösten Ausmessung des Messlichts ausgebildet ist, wobei die bildgebende Aufpickeinrichtung (33) auch zur farblichen Ausmessung des Messlichts ausgebildet ist und dass die spektrale Aufpickeinrichtung (32) und die bildgebende Aufpickeinrichtung (33) so angeordnet sind, dass sie das vom Messfeld (MF) zurückgestrahlte Messlicht unter derselben Beobachtungsrichtung empfangen,
wobei die Steueranordnung (C) dazu ausgebildet ist, von der bildgebenden Aufpickeinrichtung (33) erzeugte Farbbilddaten mittels von derjenigen spektralen Aufpickeinrichtung (32), welche dieselbe Beobachtungsrichtung wie die bildgebende Aufpickeinrichtung (33) aufweist, erzeugter Spektralmesswerte farblich zu korrigieren, wobei die spektrale Aufpickeinrichtung (32) als Lichtdetektor ein Spektrometer (32a) und die bildgebende Aufpickeinrichtung (33) als Lichtdetektor eine digitale Farbkamera (33a) umfasst und die Messanordnung (MA) einen Strahlenteiler (33c) aufweist, der einen abschnittsweise gemeinsamen Aufpickstrahlengang (32s, 33s) aufteilt und einerseits auf das Spektrometer (32a) und andererseits auf die Farbkamera (33a) lenkt,
wobei die mindestens drei Beleuchtungsrichtungen und die mindestens eine Beobachtungsrichtung in einer gemeinsamen, durch die Gerätenormale (DN) verlaufenden System-Ebene (SP) liegen und
wobei der Strahlenteiler (33c) um im Wesentlichen 45° aus der System-Ebene (SP) herausgedreht angeordnet ist, so dass das Messlicht für die Farbkamera (33a) aus der System-Ebene (SP) herausgeleitet wird und die s und p Polarisationskomponenten ausgeglichen werden, die orthogonal zur System-Ebene (SP) stehen.

2. Handmessgerät nach dem vorangehenden Anspruch, **dadurch gekennzeichnet, dass** die Beobachtungsrichtung der spektralen Aufpickeinrichtung (32) und der bildgebenden Aufpickeinrichtung (33) bezüglich der Gerätenormalen (DN) um 15° geneigt ist.

3. Handmessgerät nach einem der vorangehenden Ansprüche, **dadurch gekennzeichnet, dass** die Messanordnung (MA) eine weitere spektrale Aufpickeinrichtung (31) aufweist, die das vom Messfeld (MF) zurückgestrahlte Messlicht aus einer anderen Beobachtungsrichtung als der Beobachtungsrichtung der bildgebenden Aufpickeinrichtung (33) empfängt.

4. Handmessgerät nach Anspruch 3, **dadurch gekennzeichnet, dass** die Beobachtungsrichtung der weiteren spektralen Aufpickeinrichtung (31) bezüglich der Gerätenormalen (DN) um 45° geneigt ist.

5. Handmessgerät nach einem der vorangehenden Ansprüche, **dadurch gekennzeichnet, dass** die Messanordnung (MA) Beleuchtungseinrichtungen (21-24) mit unterschiedlichen Beleuchtungsrichtungen aufweist, die bezüglich der Gerätenormalen (DN) in die entgegengesetzte Richtung wie die Beobachtungsrichtungen der Aufpickeinrichtungen (3133) geneigt sind.

6. Handmessgerät nach einem der vorangehenden Ansprüche, **dadurch gekennzeichnet, dass** die Messanordnung (MA) Beleuchtungseinrichtungen (26, 27) mit unterschiedlichen Beleuchtungsrichtungen aufweist, die bezüglich der Gerätenormalen (DN) in dieselbe Richtung wie die Beobachtungsrichtungen der Aufpickeinrichtungen (31-33) geneigt sind.

7. Handmessgerät nach einem der vorangehenden Ansprüche, **dadurch gekennzeichnet, dass** die Messanordnung (MA) eine zusätzliche Glanzbeleuchtungseinrichtung (29) aufweist, die das Messfeld (MF) unter einem Winkel von im Wesentlichen 20° mit einem divergenten Strahlenbündel beleuchtet.

8. Handmessgerät nach einem der vorangehenden Ansprüche, **dadurch gekennzeichnet, dass** die Messanordnung (MA) ein optisches Element (39), insbesondere eine Linse mit negativer Brechkraft, aufweist, das in das Bildfeld hinein und aus diesem heraus beweglich ist und eine virtuelle konvexe Bildfeldwölbung (39a) erzeugt.

9. Handmessgerät nach einem der vorangehenden Ansprüche, **dadurch gekennzeichnet, dass** die Messanordnung (MA) eine zusätzliche weitschweifig beleuchtende Beleuchtungseinrichtung (28) in unmittelbarer Nähe der Messöffnung (6) aufweist.

10. Handmessgerät nach einem der vorangehenden Ansprüche, **dadurch gekennzeichnet, dass** eine Beleuchtungseinrichtung (27) mit einem in ihren Beleuchtungsstrahlengang (27s) einbringbaren optischen Element (38) ausgestattet ist, welches eine Verkleinerung des von der Beleuchtungseinrichtung (29) ausgeleuchteten Bereichs bewirkt.

11. Handmessgerät nach Anspruch 10, **dadurch gekennzeichnet, dass** die mit dem optischen Element (38) ausgestattete Beleuchtungseinrichtung (27) bezüglich der Gerätenormalen (DN) auf derselben Seite wie die Aufpickeinrichtungen (31-33) liegt.

12. Handmessgerät nach einem der vorangehenden Ansprüche, **dadurch gekennzeichnet, dass** die Messanordnung (MA) eine integrierte Weissreferenz (35) aufweist, die vorübergehend in die Strahlengänge der Beleuchtungseinrichtungen (21-27) und der Aufpickeinrichtungen (31-33) einbringbar ist.

13. Handmessgerät nach Anspruch 12, **dadurch gekennzeichnet, dass** die Weissreferenz (35) dazu ausgebildet ist, in randnahen Bereichen (35b, 35c) auf sie auftreffendes Licht in einen zentralen Bereich (35a) der Weissreferenz (35) umzulenken.

14. Handmessgerät nach Anspruch 12 oder 13, **dadurch gekennzeichnet, dass** die Messanordnung (MA) eine Referenzbeleuchtungseinrichtung (30) zur Beleuchtung der Weissreferenz (35) mit Licht mit schmalbandigen Wellenlängenbereichen aufweist.

15. Handmessgerät nach einem der vorangehenden Ansprüche, **dadurch gekennzeichnet, dass** zumindest einigen Beleuchtungseinrichtungen (21-27) Referenzkanäle zugeordnet sind, welche einen Teil des Beleuchtungslichts aus den Beleuchtungseinrichtungen (21-27) auskoppeln und über Lichtleiter (41-47) und einen Lichtmischer (34b) einem Spektrometer (34a) zuführen.

16. Handmessgerät nach einem der vorangehenden Ansprüche, **dadurch gekennzeichnet, dass** die Steueranordnung (C) dazu ausgebildet ist, die von der bildgebenden Aufpickeinrichtung (33) erzeugten Farbbilddaten (601) in standardisierte Farbbilddaten (611) mit definierter Auflösung, Skala relativ zum absoluten Weiss und Farbraum CIE XYZ oder sRGB umzurechnen.

17. Handmessgerät nach einem der vorangehenden Ansprüche, **dadurch gekennzeichnet, dass** zumindest einige der Beleuchtungseinrichtungen (21-27) im Wesentlichen gleich aufgebaut sind und jeweils mindestens eine primäre Lichtquelle (21a) und eine durch eine Apertur bzw. Feldblende gebildete sekundäre Lichtquelle (21d) aufweisen, wobei die mindestens eine primäre Lichtquelle (21a) die sekundäre Lichtquelle (21d) über einen Kollimator (21b) und einen Homogenisator (21c) ausleuchtet.

18. Handmessgerät nach einem der vorangehenden Ansprüche, **dadurch gekennzeichnet, dass** zumindest einige der Beleuchtungseinrichtungen (21-27) eine gemeinsame zentrale Lichtquelle (50) aufweisen, deren Ausgangslicht über einen Multiplexer (59) auf die Beleuchtungskanäle der Beleuchtungseinrichtungen (21-27) sowie eine Referenzaufpickeinrichtung (34) verteilt wird.

19. Handmessgerät nach Anspruch 17 oder 18, **dadurch gekennzeichnet, dass** die Beleuchtungseinrichtungen (21-27) oder die zentrale Lichtquelle (50) nichtabbildende Kollimatoren enthalten, die einen weitgehend verlustfreien Zugriff auf die gesamte Etendue einer oder mehrerer Primärlichtquelle(n) erlauben.

20. Handmessgerät nach Anspruch 19, **dadurch gekennzeichnet, dass** bei den Beleuchtungseinrichtungen (21-27) oder der zentralen Lichtquelle (50) eine oder mehrere zusätzliche Lichtquellen über den nicht genutzten Teil der Etendue einer oder mehrerer Primärlichtquelle(n) hinzugefügt wird (werden).

21. Handmessgerät nach einem der Ansprüche 18-20, **dadurch gekennzeichnet, dass** bei den Beleuchtungseinrichtungen (21-27) oder der zentralen Lichtquelle (50) Referenzlicht aus dem nicht genutzten Teil der Etendue der Primärlichtquelle(n) ausgekoppelt wird.

## Claims

1. A handheld measuring device for detecting the visual impression of a measuring object, comprising a measuring assembly (MA), an electronic control assembly (C) and a casing (H) receiving said measuring assembly (MA) and said electronic control assembling (C) and having a measuring opening (6) through which the illumination of a measuring field (MF) on the surface of a measuring object (MO) and the picking up of the measuring light reflected back from said measuring field (MF) is performed, wherein said measuring assembly (MA) comprises a number of illuminating devices (21-27) for exposing said measuring field (MF) to illumination light in at least three illumination directions with respect to a normal direction (DN) of the device, and a number of pick-up devices (31-33) for detecting said measuring light in at least one observation direction with respect to said normal direction (DN) of the device, wherein at least one spectral pick-up device (32) is arranged for a local integral spectral measurement of the measuring light reflected back from said measuring field and at least one imaging pick-up device (33) is arranged for a locally resolved measurement of said measuring light, wherein said imaging pick-up device (33) is also arranged for a measurement in terms of colour of the measuring light, wherein said spectral pick-up device (32) and said imaging pick-up device (33) are arranged such that they receive the measuring light reflected back from said measuring field (MF) in the same observation direction,
wherein said control assembly (C) is arranged to correct in terms of colour the colour picture data generated by said imaging pick-up device (33) by means of spectral measuring values generated by that spectral pick-up device (32) which has the same observation direction as said imaging pick-up device (33), wherein said spectral pick-up device (32) as a light detector comprises a spectrometer (32a) and said pick-up device (33) as a light detector comprises a digital colour camera (33a) and that the measuring assembly (MA) comprises a beam splitter (33c) splitting a segmentally common pick-up beam path and guiding it to said spectrometer (32a) on the one hand and to said colour camera (33a) on the other hand,
wherein the at least three illumination directions and said at least one observation direction lie in the common system plane (SP) extending through said normal direction (DN) of the device and
wherein said beam splitter is arranged such that it is rotated out of said system plane (SP) by substantially 45° such that the measuring light for the colour camera (33a) is guided out from said system plane (SP) and the s and p polarisation components which are orthogonal with respect to the system plane (SP) are balanced.

2. The handheld measuring device according to the preceding claim, **characterized in that** said observation direction of said spectral pick-up device (32) and of said imaging pick-up device (33) is inclined by 15° with respect to the normal direction (DN) of the device.

3. The handheld measuring device according to one of the preceding claims, **characterized in that** said measuring assembly (MA) comprises a further spectral pick-up device (31) receiving the measuring light reflected back from said measuring field (MF) from an observation direction which is different from the observation direction of the said imaging pick-up device (33).

4. The handheld measuring device according to claim 3, **characterized in that** the observation direction of said further spectral pick-up device (31) is inclined by 45° with respect to the normal direction (DN) of the device.

5. The handheld measuring device according to one of the preceding claims, **characterized in that** said measuring assembly (MA) comprises illumination devices (21-24) having different illumination directions which are inclined in the direction opposite to the observation directions of said pick-up devices (31-33) with respect to the normal direction (DN) of the device.

6. The handheld measuring device according to one of the preceding claims, **characterized in that** said measuring assembly (MA) comprises illumination devices (26, 27) having different illumination directions which are inclined in the same direction as the observation directions of said pick-up devices (31-33) with respect to the normal direction (DN) of the device.

7. The handheld measuring device according to one of the preceding claims, **characterized in that** said measuring assembly (MA) comprises an additional gloss illumination device (29) illuminating said measuring field (MF) with a divergent light beam at an angle of substantially 20°.

8. The handheld measuring device according to one of the preceding claims, **characterized in that** said measuring assembly (MA) comprises an optical element (39), especially a lens having a negative refractive power, which is movable into and out of the picture field and generates a virtual picture field curvature (39a).

9. The handheld measuring device according to one of the preceding claims, **characterized in that** said measuring assembly (MA) comprises an additional diffusely illuminating illumination device (28) immediately adjacent to said measuring opening (6).

10. The handheld measuring device according to one of the preceding claims, **characterized in that** an illumination device (27) is provided with an optical element (38) insertable into its illumination light path (27s) and effecting a demagnification of the region illuminated by said illumination device (29).

11. The handheld measuring device according to claim 10, **characterized in that** said illumination device (27) provided with said optical element (38) lies on the same side as said pick-up devices (31-33) with respect to the normal direction (DN) of the device.

12. The handheld measuring device according to one of the preceding claims **characterized in that** said measuring assembly (MA) comprises an integrated white reference (35) which is temporarily insertable into the light paths of said illumination devices (21-27) and said pick-up devices (31-33), respectively.

13. The handheld measuring device according to claim 12, **characterized in that** said white reference (35) is arranged to divert light impinging thereon in regions (35b, 35c) near the boundary into a central region (35a) of said white reference (35).

14. The handheld measuring device according to claim 12 or 13, **characterized in that** said measuring assembly (MA) comprises a reference illumination device (30) to illuminate said white reference (35) with light having narrow-band wavelength regions.

15. The handheld measuring device according to one of the preceding claims, **characterized in that** at least some illumination devices (21-27) are associated with reference channels coupling out a part of the illumination light from said illumination devices (21-27) and supplying it to a spectrometer (34b) via light guides (41-47) and a light mixer (34b).

16. The handheld measuring device according to one of the preceding claims, **characterized in that** said control assembly (C) is arranged to convert the colour picture data (601) generated by said imaging pick-up device (33) into standardised colour picture data (611) having a defined resolution and a scale with respect to the absolute white and a colour space CIE XYZ or sRGB.

17. The handheld measuring device according to one of the preceding claims, **characterized in that** at least some of said illumination devices (21-27) have substantially the same construction and each comprise at least one primary light source (21a) and a secondary light source (21d) constituted by an aperture and a field diaphragm, respectively, wherein said at least one primary light source (21a) illuminates said secondary light source (21d) via a collimator and a homogenizer (21c).

18. The handheld measuring device according to one of the preceding claims, **characterized in that** at least some of said illumination devices (21-27) comprise a common central light source (50) the outgoing light of which is distributed via a multiplexer (59) to said illumination channels of said illumination devices (21-27) and to a reference pick-up device (34).

19. The handheld measuring device according to claim 17 or 18, **characterized in that** said illumination devices (21-27) or said central light source (50) comprise non-imaging collimators permitting a substantially lossless access to the whole etendue of one or more primary light sources.

20. The handheld measuring device according to claim 19, **characterized in that** at said illumination devices (21-27) or said central light source (50) one or more additional light sources are added across the unused part of the etendue of one or more primary light sources.

21. The handheld measuring device according to one of the claims 18-20, **characterized in that** at said illumination devices (21-27) or said central light source (50) reference light is coupled out of the unused part of the etendue of said primary light source(s).

## Revendications

1. Appareil de mesure portatif pour capturer l'impression visuelle d'un objet de mesure avec un dispositif de mesure (MA), un dispositif de commande électronique (C) et un boîtier (H) recevant le dispositif de mesure (MA) et le dispositif de commande électronique (C) avec une ouverture de mesure (6) à travers laquelle s'effectue l'éclairage d'un champ de mesure (MF) sur une surface d'un objet de mesure (MO) ainsi que la capture de la lumière de mesure réfléchie par le champ de mesure (MF), où le dispositif de mesure (MA) comprend un nombre de dispositifs d'éclairage (21-27) pour l'application d'une lumière d'éclairage sur le champ de mesure (MF) dans au moins trois directions d'éclairage relatives à la normale (DN) de l'appareil et un nombre de dispositifs de capture (31-33) pour la capture de la lumière de mesure dans au moins une direction d'observation relative à la normale (DN) de l'appareil, où au moins un dispositif de capture spectrale (32) est configuré pour la mesure spectrale intégrale locale de la lumière de mesure réfléchie par le champ de mesure et au moins un dispositif de capture d'image (33) est configuré pour la mesure avec une résolution locale de la lumière de mesure, où le dispositif de capture d'image (33) est également configuré pour la mesure de la couleur de la lumière de mesure et le dispositif de capture spectrale (32) et le dispositif de capture d'image (33) sont disposés de telle manière qu'ils reçoivent la lumière de mesure réfléchie par le champ de mesure (MF) depuis la même direction d'observation,
où le dispositif de commande (C) est configuré pour corriger les couleurs des données de couleurs de l'image générées par le dispositif de capture d'image (33) au moyen de valeurs de mesure spectrales générées par le dispositif de capture spectrale (32) ayant la même direction d'observation que le dispositif de capture d'image (33), où le dispositif de capture spectrale (32) comprend un spectromètre (32) en tant que détecteur de lumière et le dispositif de capture d'image (33) comprend une caméra couleur numérique (33a) en tant que détecteur de lumière et le dispositif de mesure (MA) comporte un séparateur de faisceau (33c) qui sépare un trajet (32s, 33s) partiellement commun d'un faisceau destiné à être capturé et le dirige d'une part vers le spectromètre (32a) et d'autre part vers la caméra couleur (33a),
où les au moins trois directions d'éclairage et l'au moins une direction d'observation se trouvent dans un plan de système (SP) commun coupant la normale de l'appareil (DN) et
où le séparateur de faisceau (33c) est disposé de manière à être tourné substantiellement à 45° hors du plan de système (SP), de sorte que la lumière de mesure pour la caméra couleur (33a) est guidée hors du plan du système (SP) et les composantes de polarisation s et p orthogonales par rapport au plan du système (SP) sont équilibrées.

2. Appareil de mesure portatif selon la revendication précédente, **caractérisé en ce que** la direction d'observation du dispositif de capture spectrale (32) et du dispositif de capture d'image (33) est inclinée de 15° par rapport à la normale (DN) de l'appareil.

3. Appareil de mesure portatif selon l'une des revendications précédentes, **caractérisé en ce que** le dispositif de mesure (MA) comporte un autre dispositif de capture spectrale (31) recevant la lumière de mesure réfléchie par le champ de mesure (MF) à partir d'une autre direction d'observation que la direction d'observation du dispositif de capture d'image (33).

4. Appareil de mesure portatif selon la revendication 3, **caractérisé en ce que** la direction d'observation de l'autre dispositif de capture spectrale (31) est inclinée de 45° par rapport à la normale (DN) de l'appareil.

5. Appareil de mesure portatif selon l'une des revendications précédentes, **caractérisé en ce que** le dispositif de mesure (MA) comporte des dispositifs d'éclairage (21-24) avec des directions d'éclairage différentes inclinées par rapport à la normale (DN) de l'appareil dans la direction opposée aux directions d'observation des dispositifs de capture (31-33).

6. Appareil de mesure portatif selon l'une des revendications précédentes, **caractérisé en ce que** le dispositif de mesure (MA) comporte des dispositifs d'éclairage (26, 27) avec des directions d'éclairage différentes inclinées, par rapport à la normale (DN) de l'appareil, dans la même direction que les directions d'observation des dispositifs de capture (31-33).

7. Appareil de mesure portatif selon l'une des revendications précédentes, **caractérisé en ce que** le dispositif de mesure (MA) comporte un dispositif d'éclairage par lumière concentrée (29) supplémentaire éclairant le champ de mesure (MF) avec un faisceau divergent à un angle de substantiellement 20°.

8. Appareil de mesure portatif selon l'une des revendications précédentes, **caractérisé en ce que** le dispositif de mesure (MA) comporte un élément optique (39), en particulier une lentille à réfringence négative, apte à être déplacée dans le champ de l'image et hors du champ de l'image et générant une courbure du champ (39a) convexe virtuelle.

9. Appareil de mesure portatif selon l'une des revendications précédentes, **caractérisé en ce que** le dispositif de mesure (MA) comporte un dispositif d'éclairage (28) supplémentaire éclairant de manière diffuse à proximité immédiate de l'ouverture de mesure (6).

10. Appareil de mesure portatif selon l'une des revendications précédentes, **caractérisé en ce qu'**un dispositif d'éclairage (27) est équipé d'un élément optique (38) pouvant être introduit dans le trajet de son faisceau lumineux (27s), occasionnant une réduction de la région éclairée par le dispositif d'éclairage (29).

11. Appareil de mesure portatif selon la revendication 10, **caractérisé en ce que** le dispositif d'éclairage (27) équipé de l'élément optique (38) se trouve du même côté de la normale (DN) de l'appareil que les dispositifs de capture (31-33).

12. Appareil de mesure portatif selon l'une des revendications précédentes, **caractérisé en ce que** le dispositif de mesure (MA) comporte une référence des blancs intégrée (35) pouvant être temporairement introduite dans les trajets de faisceau des dispositifs d'éclairage (21-27) et des dispositifs de capture (31-33).

13. Appareil de mesure portatif selon la revendication 12, **caractérisé en ce que** la référence des blancs (35) est configurée pour dévier la lumière la touchant dans des régions (35b, 35c) proches du bord vers une région centrale (35a) de la référence des blancs (35).

14. Appareil de mesure portatif selon la revendication 12 ou 13, **caractérisé en ce que** le dispositif de mesure (MA) comporte un dispositif d'éclairage de la référence (30) pour éclairer la référence des blancs (35) avec des lumières ayant des gammes de longueurs d'ondes étroites.

15. Appareil de mesure portatif selon l'une des revendications précédentes, **caractérisé en ce que** des canaux de référence sont attribués à au moins quelques dispositifs d'éclairage (21-27), les canaux découplant une partie de la lumière d'éclairage provenant des dispositifs d'éclairage (21-27) et la conduisant à un spectromètre (34a) via des guides de lumière (41-47) et un mélangeur de lumière (34b).

16. Appareil de mesure portatif selon l'une des revendications précédentes, **caractérisé en ce que** le dispositif de commande (C) est configuré pour convertir les données de couleur d'image (601) générées par le dispositif de capture (33) en données de couleur d'image standardisées (611) avec une résolution, une échelle par rapport au blanc absolu et un espace de couleur CIE XYZ ou sRGB définis.

17. Appareil de mesure portatif selon l'une des revendications précédentes, **caractérisé en ce que** du moins quelques-uns des dispositifs d'éclairage (21-27) ont substantiellement la même structure et comportent respectivement au moins une source lumineuse primaire (21a) et une source lumineuse secondaire (21d) formée par une ouverture ou un diaphragme, où l'au moins une source lumineuse primaire (21a) éclaire la source lumineuse secondaire (21d) via un collimateur (21b) et un homogénéisateur (21c).

18. Appareil de mesure portatif selon l'une des revendications précédentes, **caractérisé en ce que** du moins quelques-uns des dispositifs d'éclairage (21-27) comportent une source lumineuse centrale commune (50), dont la lumière de sortie est répartie entre les canaux d'éclairage des dispositifs d'éclairage (21-27) et un dispositif de capture de la référence (34) via un multiplexeur (59).

19. Appareil de mesure portatif selon la revendication 17 ou 18, **caractérisé en ce que** les dispositifs d'éclairage (21-27) ou la source lumineuse centrale (50) contiennent des collimateurs sans formation d'image permettant un accès quasiment sans pertes à la totalité de l'étendue d'une ou plusieurs source(s) lumineuse(s) primaire(s).

20. Appareil de mesure portatif selon la revendication 19, **caractérisé en ce qu'**une ou plusieurs sources lumineuses supplémentaires des dispositifs d'éclairage (21-27) ou de la source lumineuse centrale (50) sont ajoutée(s) au-dessus de la partie non utilisée de l'étendue d'une ou plusieurs source(s) lumineuse(s) primaire(s).

21. Appareil de mesure portatif selon l'une des revendications 18-20, **caractérisé en ce que** dans les dispositifs d'éclairage (21-27) ou dans la source lumineuse centrale (50), de la lumière de référence provenant de la partie non utilisée de l'étendue de la/des source(s) lumineuse(s) primaire(s) est découplée.
